# EUROPEAN PATENT SPECIFICATION

(11) **EP 1 795 564 B1**
(45) Date of publication and mention of the grant of the patent: **09.02.2011**
(21) Application number: 06025025.5
(22) Date of filing: 04.12.2006
(51) Int. Cl.: C09D 11/00, B41C 1/10

(54) **Ink composition, inkjet recording method, production method of planographic printing plate, and planographic printing plate**
Tintenzusammensetzung, Verfahren für den Tintenstrahldruck, Herstellungsverfahren für eine Flachdruckplatte und Flachdruckplatte.
Composition d' encre, méthode d' impression par jet d' encre, procédé pour la fabrication de la plaque d'impression planographique et plaque d'impression planographique.

(30) Priority: 06.12.2005 JP 2005352302
(43) Date of publication of application: 13.06.2007
(73) Proprietor: Fujifilm Corporation, Minato-ku Tokyo (JP)
(72) Inventor: Watanabe, Kotaro, Yoshida-cho Haibara-gun Shizuoka-ken (JP)
(74) Representative: HOFFMANN EITLE

(56) References cited:
- EP-A- 1 484 370
- EP-A- 1 688 467
- EP-A1- 1 486 526
- WO-A-2006/054461
- US-A1- 2004 050 292
- US-A1- 2004 052 967

## Description

### BACKGROUND OF THE INVENTION

### Field of the Invention

The present invention relates to an ink composition and an inkjet recording method favorably used in inkjet recording, a printed material prepared by using the same, a planographic printing plate obtained by using the ink composition, and a method of producing the planographic printing plate.

### Description of Related Art

There are many image-recording methods of forming an image on a recording medium such as paper based on image data signals, including those in electrophotographic process, sublimation or fusion heat-transfer process, and inkjet process. Among them, the inkjet process is advantageous in that it allow printing in a cheaper device at a lower running cost, because it forms an image directly on a recording medium by ejecting ink only in desired image region and thus uses the ink more efficiently. In addition, the inkjet process is also less noisy and thus advantageous as an image-recording method.

The inkjet process allows printing not only on plain paper but also on non-water-absorptive recording media such as plastic sheet and metal plate, but recently, there is an urgent need for acceleration of printing and improvement in image quality in the process. The period needed for drying and curing the ink droplet after ejection has a great influence on the printing efficiency and the sharpness of printed image.

In the inkjet recording processes, there is a recording method using an inkjet recording ink that cures by irradiation with radiation rays. In the method, it is possible to improve the printing efficiency and the sharpness of image, by curing the ink droplet by irradiating it with radiation rays immediately after ejection or after a particular period from ejection.

If it is possible to raise the sensitivity of such an inkjet recording ink that cures by irradiation with radiation rays such as ultraviolet light or to raise the efficiency of the ink curing by radiation rays, it is possible to obtain many benefits, such as improvement in inkjet recording efficiency, reduction of power consumption, elongation of the lifetime of radiation ray generator due to decrease in the load, and prevention of evaporation of low-molecular weight substances due to insufficient curing. In addition, the improvement in sensitivity is effective in increasing the strength of the image formed with inkjet recording ink, and in particular, when the ink composition is applied to preparation of planographic printing plates, it leads to increase in the hardness of the image region and thus to increase in printing durability.

Such an inkjet process using an ink composition that cures by radiation rays such as ultraviolet light has been attracting attention recently, as the ink composition is relatively odorless and fast-drying, and allows recording on a recording medium not having ink absorbing property; and ultraviolet light-curable ink compositions that cure in radical polymerization for use in the inkjet process are disclosed (e.g., Japanese Patent Application Laid-Open (JP-A) Nos. 63-235382, 3-216379, and 5-214280, and Japanese Patent Publication (JP-B) Nos. 6-21256 and 6-62905). In addition, for the purpose of providing an inkjet recording ink that gives an image higher in sensitivity and adhesiveness to the recording medium without ink bleeding even when printed on a substrate on which direct recording by the inkjet recording method is usually difficult, compositions containing polymerizable compounds selected from particular radical polymerizable acrylate compounds and a colorant were disclosed (e.g., JP-ANos. 2003-192943 and 2003-192944). These radical polymerizable inks are superior in curing speed and give an image without ink bleeding, but also has a disadvantage in that the adhesiveness to recording medium deteriorates by the volume shrinkage during curing. They are also known to be lower in curing velocity in the presence of oxygen.

Accordingly, for the purpose of improving the adhesiveness to recording medium, cation polymerizable ink compositions showing smaller shrinkage during ultraviolet light-curing were proposed (e.g., JP-A No. 9-183928). However, these cation polymerizable inks have insufficient stability during storage because of the reactions of the acids generated therein over time, which has been the great obstacle for commercialization of these inks. For improvement in the storage stability, methods of adding a basic compound or a thermal base-generating agent were proposed (e.g., JP-ANos. 2003-312121, 2003-341217 and 2004-91558), but use of a basic compound results in emergence of a new problem that the curing sensitivity of ink was lowered by the basic compound, because it inhibited the function of the acid generated by exposure to light.

Currently as described above, there has not been a curable composition that can be applied to UV-curable ink composition or the like and can form a strong film with high sensitivity to radiation ray irradiation.

### SUMMARY OF THE INVENTION

The present invention has been made in consideration of the above problems.

A first aspect of the invention provides an ink composition including a polymerizable compound (a) having a cyclic ether-containing partial structure and at least one fluorine atom in the molecule, a polymerization initiator (b), a colorant (c) and a radical-polymerizable compound; wherein the ratio of the weight of the polymerizable compound (a) to the weight of the radical-polymerizable compound is 1 : 3 to 1 : 10.

A second aspect of the invention provides an inkjet recording method including ejecting the above ink composition onto a recording medium using an inkjet recording apparatus and curing the ink composition by irradiation of the ejected ink composition with active radiation rays.

A third aspect of the invention provides a printed material recorded by the above inkjet recording method.

A fourth aspect of the invention provides a method of producing a planographic printing plate, the method including ejecting the above-mentioned ink composition onto a substrate and forming a hydrophobic image of the cured ink composition on the substrate by irradiating the ejected ink composition with active radiation rays and thus curing the ink composition.

A fifth aspect of the invention provides a planographic printing plate that is produced by the method of producing a planographic printing plate.

Although yet to be clearly understood, the action mechanism of the invention seems to be as follows: the "polymerizable compound having a cyclic ether-containing partial structure and at least one fluorine atom in the molecule" contained in the ink composition according to the invention has a fluorine atom in the molecule, and thus, the fluorine-containing compound superior in curing efficiency is located on the surface of the ink droplet when the ink is applied on the recording medium surface. Subsequent irradiation with radiation rays leads to curing of the fluorine-containing compound in the area close to the surface, forming a tough film that blocks contact of the ink composition with external air. Therefore, polymerization of the polymerizable compound proceeds efficiently in the ink droplet, and the molecular weight of the cured film is increased, whereby a high-film strength can be achieved while maintaining the flexibility of the film.

### DESCRIPTION OF THE PRESENT INVENTION

The ink composition according to the present invention is a composition that cures by irradiation of radiation rays.

The "radiation rays" in the invention are not particularly limited, if they supply energy needed for generating an initiator species in the composition by irradiation, and may be any one of various radiation rays including α rays, γ rays, X rays, ultraviolet rays, visible rays, and electron beams. Among them, ultraviolet rays and electron beams are preferable, and ultraviolet rays are particularly preferable, from the viewpoints of curing sensitivity and availability of apparatus. Thus, the curable composition according to the invention is preferably a composition that can cure by irradiation of ultraviolet rays as the radiation rays.

The ink composition according to the invention includes a polymerizable compound (a) having a cyclic ether-containing partial structure and at least one fluorine atom in the molecule (hereinafter, referred to as specific polymerizable compound (a)).

Hereinafter, the compound will be described.

The specific polymerizable compound (a) is a compound containing a partial structure containing a cyclic ether group in its molecular structure.

The specific polymerizable compound according to the invention is preferably a compound that initiates polymerization reaction and cures in the presence of acid generated by a compound, polymerization initiator (b) described below, that generates the acid by irradiation of radiation rays.

The cyclic ether is preferably a cyclic ether having from 3 to 9 carbon atoms, more preferably a cyclic ether having from 3 to 7 carbon atoms. Specifically, the cyclic ether is particularly preferably selected from the cyclic ethers shown below, from the viewpoint of reactivity.

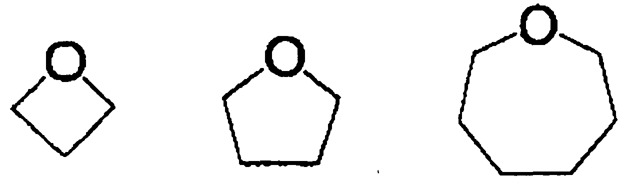

The ring structure shown may have one or more substituents if possible, and examples of the substituents include halogen atoms and alkoxy, aryloxy, nitro, and amino groups.

Only one of such ring structures or two or more thereof may be contained in the specific polymerizable compound, but, in a favorable embodiment, the specific polymerizable compound has only one of such ring structures.

The specific polymerizable compound also contains at least one fluorine atom in the molecule. The number of fluorine atoms in the molecule is preferably from 1 to 40, more preferably from 2 to 30, and still more preferably from 4 to 20.

The fluorine atom may be introduced in any way, but it is preferably introduced as a functional group obtained by substituting hydrogen atoms of a hydrocarbon group with fluorine atoms, for example as a chain haloalkyl group having from 1 to 40 fluorine atoms, preferably from 4 to 20 fluorine atoms, and more preferably from 4 to 12 fluorine atoms in the structure. The functional group containing one or more fluorine atoms may be directly bound to the cyclic partial structure, or, when the specific polymerizable compound according to the invention has multiple partial cyclic structures, the fluorine atom may be introduced into the connecting group that connects the ring structures.

In the particularly favorable embodiment, the specific polymerizable compound has one of the structures shown above, and more preferably has an oxetane structure having 3 carbon atoms and a straight-chain alkyl group containing from 4 to 20 fluorine atoms.

Hereinafter, typical examples of the specific polymerizable compounds according to the invention will be listed, but the invention is not limited by these typical examples.

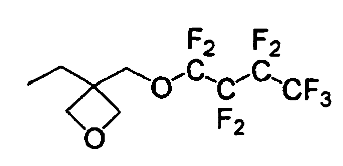

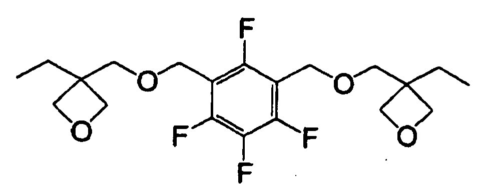

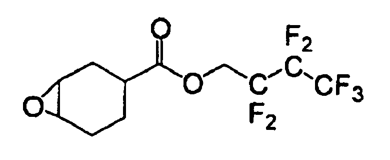

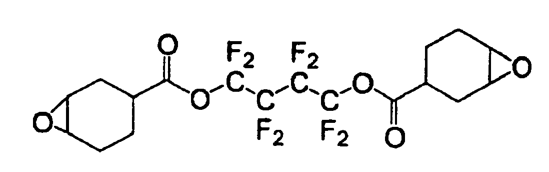

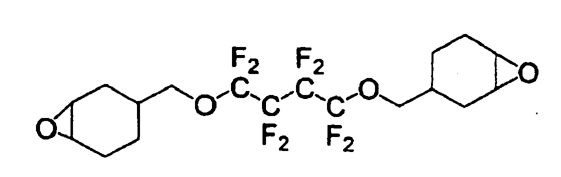

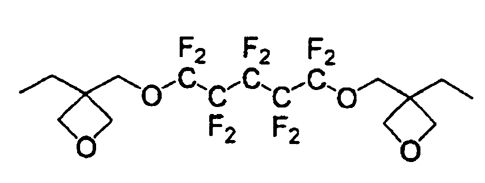

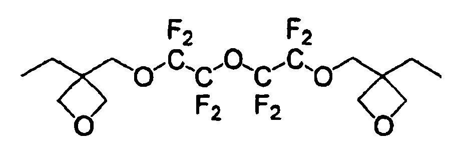

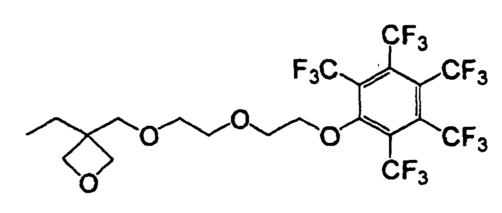

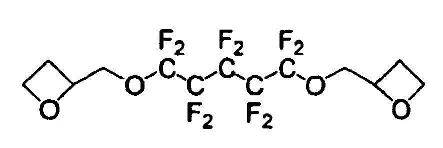

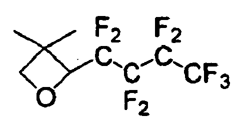

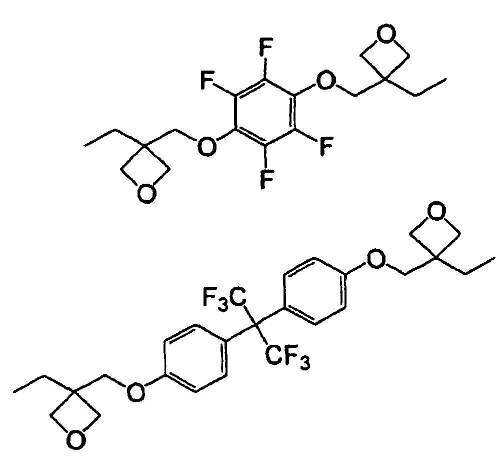

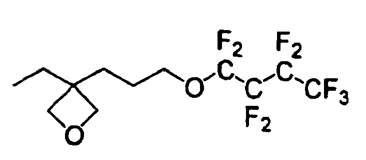

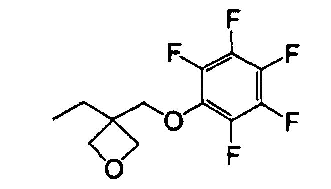

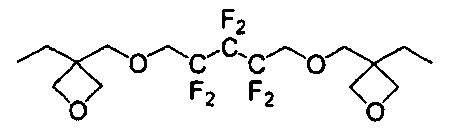

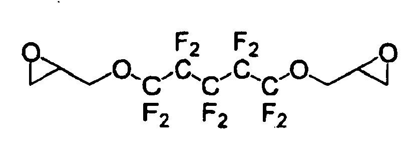

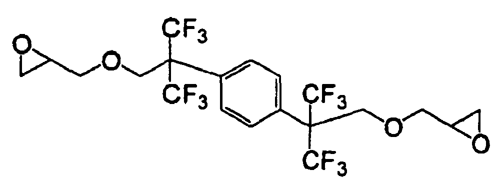

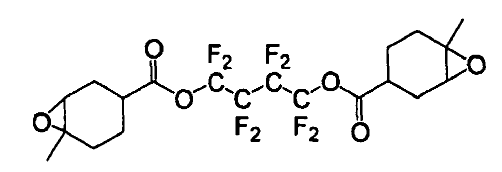

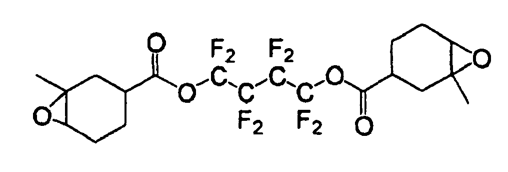

The specific polymerizable compounds can be prepared, for example, by the methods described in JP-ANos. 2001-278875, 2001-278874, 2002-275172, 2003-2881, 2003-12662 and 2004-59527, but the production method is not limited thereto.

The ink composition according to the invention may contain only one specific polymerizable compound (a), or may contain two or more specific polymerizable compounds (a).

The content of the specific polymerizable compound (a) is preferably from 1 to 50 mass %, more preferably from 3 to 20 mass %, with respect to the total solid matters in the ink composition according to the invention.

A combination of a specific polymerizable compound and a radical-polymerizable compound is advantageous in terms of improvement in sensitivity. In general, curing with the radical-polymerizable compound initiates and proceeds from the bottom face upon exposure to light. However, in the invention, because the specific polymerizable compound positioned on the surface forms an oxygen-blocking cured layer on the surface rapidly by exposure to light, curing proceeds from both of the surface and the bottom face of ink at high sensitivity without any influence from oxygen that inhibits radical polymerization, thus giving a strong image.

### (Radical-polymerizable compound)

The radical-polymerizable compound is a compound having a radical-polymerizable ethylenic unsaturated bond. The radical-polymerizable compound is not particularly limited as long as it has at least one radical-polymerizable ethylenic unsaturated bond in the molecule. The radical-polymerizable compound may be in the form of a monomer, an oligomer, a polymer, or the like. Only one radical-polymerizable compound may be used, or two or more radical-polymerizable compounds may be used in combination in any ratio for the purpose of improving the desirable properties. Combined use of two or more radical-polymerizable compounds is preferable in view of controlling properties such as reactivity and physical properties.

Examples of polymerizable compounds having a radical-polymerizable ethylenic unsaturated bond include unsaturated carboxylic acids such as acrylic acid, methacrylic acid, itaconic acid, crotonic acid, isocrotonic acid, and maleic acid, and salts thereof; anhydrides having an ethylenic unsaturated group, acrylonitrile, styrene, and other radical-polymerizable compounds such as various unsaturated polyesters, unsaturated polyethers, unsaturated polyamides, and unsaturated urethanes.

Specific examples thereof include acrylic acid derivatives such as 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentylglycol diacrylate, 1,6-hexanediol diacrylate, ethylene glycol diacrylate, diethylene glycol diacrylate, triethylene glycol diacrylate, tetraethylene glycol diacrylate, polyethylene glycol diacrylate, polypropylene glycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, N-methylol acrylamide, diacetone acrylamide, and epoxyacrylate; methacrylic derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethylene glycol dimethacrylate, triethylene glycol dimethacrylate, polyethylene glycol dimethacrylate, polypropylene glycol dimethacrylate, trimethylolethane trimethacrylate, trimethylolpropane trimethacrylate, and
2,2-bis(4-methacryloxypolyethoxyphenyl)propane; and allyl compound derivatives such as allyl glycidyl ether, diallyl phthalate, and triallyl trimellitate. More specific examples thereof include radical-polymerizable or radical-crosslinkable monomers, oligomers and polymers that are known in the art or commercially available and described in Shinzo Yamashita Ed., "Crosslinking Agent Handbook ", (1981, Taiseisha), Kiyoshi Kato Ed., "UV-EB Curing Handbook (Raw Materials)" (1985, Kobunshi Kankokai), RadTech Japan Ed., "Application and Market of UV-EB Curing Technology", p. 79, (1989, CMC Publishing), Eiichiro Takiyama, "Polyester Resin Handbook", (1988, Nikkankogyo Shimbun), and others.

Examples of radical-polymerizable compounds include the photocurable polymerizable compounds used in the photopolymerizable compositions described in JP-A No. 7-159983, JP-B No. 7-31399, JP-A Nos. 8-224982, 10-863, 9-134011, and others.

The content ratio by weight of the specific polymerizable compound to the radical-polymerizable compound is in the range of 1:3 to 1:10, preferably in the range of 1:4 to 1:8.

As for the selection of the polymerization initiator, deterioration in sensitivity due to the light-blocking effect of the colorant used in the ink composition can be prevented by using a radical-cation hybrid curable ink containing a combination of a specific polymerizable compound according to the invention and a radical-polymerizable compound as well as polymerization initiators corresponding thereto, as described above.

### (Polymerization initiator (b))

The ink composition according to the invention contains a polymerization initiator. The polymerization initiator is a compound that can generate an active species that initiates and accelerates polymerization of the polymerizable compound contained in the composition upon application of energy. In the invention, a compound that generates acid upon irradiation of radiation rays is used favorably.

### (Compound that generates acid upon irradiation of radiation rays)

The curable composition according to the invention preferably contains a compound that generates acid by irradiation of radiation rays (hereinafter, referred to as "photoacid generator"). In the invention, the acid generated by irradiation of radiation rays initiates polymerization reaction of the polymerizable compound, so that the composition cures.

The photoacid generator for use in the ink composition according to the invention is selected, for example, from photocationic polymerization photoinitiators, photo-radical polymerization photoinitiators, photo-decolorant or photo-alterant of colorants, and compounds used in microresists that generate acid upon irradiation of light (ultraviolet rays at 400 to 200 nm, far ultraviolet rays, particularly preferably, g-rays, h-rays, i-rays, or KrF excimer laser beams), ArF excimer laser beams, electron beams, X-rays, molecular beams, ion beams or the like.

Examples of the photoacid generators include compounds that decompose and generate acid upon irradiation of radiation rays, examples of which include onium salt compounds such as diazonium salts, phosphonium salts, sulfonium salts, and iodonium salts, and sulfonate compounds such as imide sulfonates, oxime sulfonates, diazo disulfones, disulfone, and o-nitrobenzyl sulfonate. Among them, onium salt compounds functioning both as an acid generator and as a radical polymerization initiator are preferable.

Examples of the other compounds for use in the invention that generate acid upon irradiation of active light or radiation rays (photoacid generators) include the diazonium salts described in S. I. Schlesinger, Photogr. Sci. Eng., 18,387 (1974), T. S. Bal et al., Polymer, 21,423 (1980), and others; the ammonium salts described in U.S. Patent Nos. 4,069,055, 4,069,056, and Re27,992, JP-A No. 3-140140, and others; the phosphonium salts described in D. C. Necker et al., Macromolecules, 17, 2468 (1984), C. S. Wen et al., Teh, Proc. Conf. Rad. Curing ASIA, p.478 Tokyo, Oct (1988), U.S. Patent Nos. 4,069,055 and 4,069,056, and others; the iodonium salts described in J. V. Crivello et al., Macromolecules, 10 (6), 1307 (1977), Chem. & Eng. News, Nov. 28, p.31 (1988), EP Patent Nos. 104,143, 339,049, and 410,201, JP-ANos. 2-150848 and 2-296514, and others;
the sulfonium salts described in J. V. Crivello et al., Polymer J. 17, 73 (1985), J. V. Crivello et al., J. Org. Chem. 43, 3055 (1978), W. R. Watt et al., J. Polymer Sci., Polymer Chem. Ed., 22, 1789 (1984), J. V Crivello et al., Polymer Bull., 14, 279 (1985), J. V. Crivello et al., Macromolecules, 14 (5), 1141 (1981), J. V. Crivello et al., J. Polymer Sci. Polymer Chem. Ed., 17, 2877 (1979), EP Patent Nos. 370,693, 161,811, 410,201, 339,049, 233,567, 297,443, and 297,442, U.S. Patent Nos. 3,902,114, 4,933,377, 4,760,013, 4,734,444, and 2,833,827, Germany Patent Nos. 2,904,626, 3,604,580, and 3,604,581, JP-ANos. 7-28237 and 8-27102, and others;
the selenonium salts described in J. V. Crivello et al., Macromolecules, 10 (6), 1307 (1977), J. V. Crivello et al., J. Polymer Sci., Polymer Chem. Ed., 17,1047 (1979), and others; the onium salts such as arsonium salts described in C. S. Wen et al., Teh. Proc. Conf. Rad. Curing ASIA, p.478 Tokyo, Oct (1988) and others; the organic halogen compounds described in U.S. Patent No. 3,905,815, JP-B No. 46-4605, JP-A Nos. 48-36281, 55-32070, 60-239736, 61-169835, 61-169837, 62-58241, 62-212401, 63-70243, and 63-298339, and others; the organic metal/organic halides described in K. Meier et al., J. Rad. Curing, 13 (4), 26 (1986), T. P. Gill et al., Inorg. Chem., 19, 3007 (1980), D. Astruc, Acc. Chem. Res., 19 (12), 377 (1986), JP-A No. 2-161445, and others;
the photoacid generators having an o-nitrobenzyl protecting group described in S. Hayase et al., J. Polymer Sci., 25, 753 (1987), E. Reichmanis et al., J. Polymer Sci., Polymer Chem. Ed., 23, 1 (1985), Q. G. Zhu et al., J. Photochem., 36, 85, 39, 317 (1987), B. Amit et al, Tetrahedron Lett., (24) 2205 (1973), D. H. R. Barton et al., J. Chem. Soc., 3571 (1965), P. M. Collins et al., J. Chem. Soc., Perkin I, 1695 (1975), M. Rudinstein et al., Tetrahedron Lett., (17), 1445 (1975), J. W. Walker et al., J. Am. Chem. Soc., 110, 7170 (1988), S. C. Busman et al., J. Imaging Technol., 11(4), 191 (1985), H. M. Houlihan et al, Macromolecules, 21,2001 (1988), P. M. Collins et al., J. Chem. Soc., Chem. Commun., 532 (1972), S. Hayase et al., Macromolecules, 18, 1799 (1985), E. Reichmanis et al., J. Electrochem. Soc., Solid State Sci. Technol., 130(6), F. M. Houlihan et al., Macromolecules, 21,2001 (1988), EP Patent Nos. 0290,750, 046,083, 156,535, 271,851, and 0,388,343, U.S. Patent Nos. 3,901,710 and 4,181,531, JP-A Nos. 60-198538 and 53-133022, and others;
the compounds that undergo photolysis to generate sulfonic acid, such as iminosulfonates, described in M. Tunooka et al., Polymer Preprints Japan, 35 (8), G. Bemeretal, J. Rad. Curing, 13(4), W. J. Wijs et al., Coating Technol., 55(697), 45 (1983), Akzo H. Adachi et al., Polymer Preprints, Japan, 37 (3), EP Patent Nos. 0199,672, 84515, 044,115, 618,564, and 0101,122, U.S. Patent Nos. 4,371,605 and 4,431,774, JP-ANos. 64-18143, 2-245756, and 3-140109, and others; the disulfone compounds described in JP-A Nos. 61-166544 and 2-71270 and others; and the diazoketosulfone and diazodisulfone compounds described in JP-ANos. 3-103854, 3-103856, and 4-210960, and others.

Other examples thereof include compounds obtained by introducing a group or compound that generates acid upon light irradiation into the polymer main chain or onto a side chain, such as those described in M. E. Woodhouse et al., J. Am. Chem. Soc, 104, 5586 (1982), S. P. Pappas et al., J. Imaging Sci, 30(5), 218 (1986), S. Kondo et al., Makromol. Chem., Rapid Commun, 9,625 (1988), Y. Yamada et al., Makromol. Chem., 152, 153, 163 (1972), J. V. Crivello et al., J. Polymer Sci., Polymer Chem., Ed., 17, 3845 (1979), U.S. Patent No. 3,849,137, Germany Patent No. 3,914,407, JP-ANos. 63-26653, 55-164824, 62-69263, 63-146038, 63-163452, 62-153853, and 63-146029, and others. Specific examples thereof include onium salts such as diazonium salts, ammonium salts, phosphonium salts, iodonium salts, sulfonium salts, selenonium salts, and arsonium salts, organic halogen compounds, organic metal/organic halides, photoacid generators having an o-nitrobenzyl protecting group, compounds that generate sulfonic acid by photolysis such as imino sulfonates, disulfonated compounds, and diazoketosulfone and diazodisulfone compounds.

In addition, usable are the compounds that generate acid upon photoirradiation described in V. N. R. Pillai, Synthesis, (1), 1 (1980), A. Abad et al., Tetrahedron Lett., (47) 4555 (1971), D. H. R. Barton et al., J. Chem. Soc., (C), 329 (1970), U.S. Patent No. 3,779,778, EP Patent No. 126,712, and others.

Examples of favorable photoacid generators for use in the invention include the compounds represented by the following formulae (b1), (b2), and (b3).

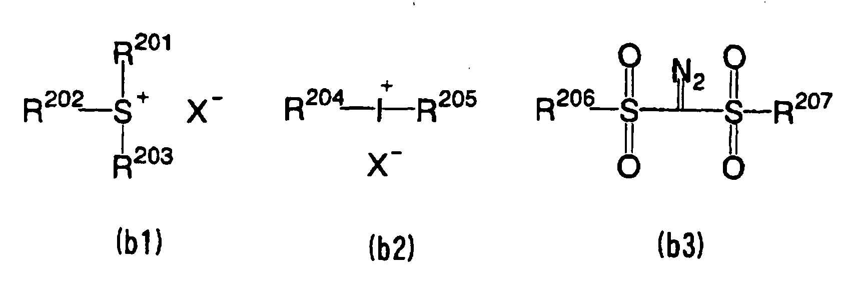

In formula (b1), R²⁰¹, R²⁰² and R²⁰³ each independently represent an organic group.

X⁻ represents a non-nucleophilic anion, preferably a sulfonate anion, a carboxylate anion, a bis(alkylsulfonyl)amide anion, a tris(alkylsulfonyl)methide anion, BF₄⁻, BF₆⁻, SbF₆⁻, or a group shown below, preferably an organic anion having one or more carbon atoms.

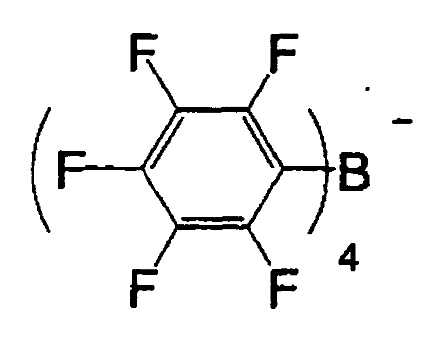

An example of favorable organic anions is the organic anion represented by any of the following formulae.

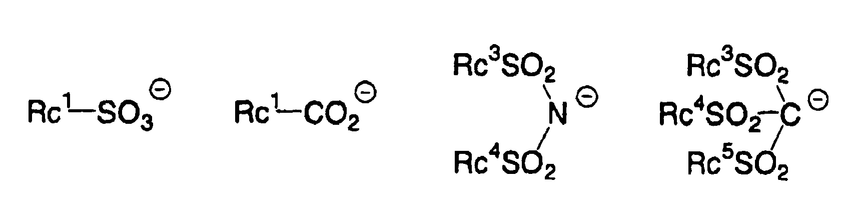

Rc¹ represents an organic group.

The organic group represented by Rc¹ may be a group having from 1 to 30 carbon atoms, preferably an alkyl, cycloalkyl, or aryl group, or a group in which two or more of these groups are bonded to each other via a connecting group such as single bond, -O-, -CO₂-, -S-, -SO₃-, or -SO₂(Rd¹)-.

Rd¹ represents a hydrogen atom or an alkyl group.

Rc³, Rc⁴, and Rc⁵ each independently represent an organic group.

The organic group represented by Rc³, Rc⁴, or Rc⁵ is preferably selected from the organic groups described above as preferable examples of group represented by Rc¹, and is most preferably a perfluoroalkyl group having from 1 to 4 carbon atoms. Rc³ and Rc⁴ may bind to each other to form a ring.

Examples of the group formed by binding of Rc³ to Rc⁴ include alkylene and arylene groups. The group formed by binding of Rc³ to Rc⁴ is preferably a perfluoroalkylene group having from 2 to 4 carbon atoms.

Most preferably, the organic group represented by any of Rc¹ and Rc³ to Rc⁵ is an alkyl group substituted by a fluorine atom or a fluoroalkyl group at the 1-position, or a phenyl group substituted by a fluorine atom or a fluoroalkyl group. Presence of the fluorine atom or the fluoroalkyl group increases the acidity of the acid generated by photoirradiation, thus increasing the sensitivity.

The number of carbons in the organic group represented by R²⁰¹, R²⁰² or R²⁰³ is generally from 1 to 30, preferably from 1 to 20.

Two of R²⁰¹ to R²⁰³ may bind to each other to form a ring structure which may contain one or more of an oxygen atom, a sulfur atom, an ester bond, an amide bond, or a carbonyl group in the ring. Examples of the group formed by binding between two of R²⁰¹ to R²⁰³ include alkylene groups (such as a butylene group and a pentylene group).

Specific examples of the organic group represented by R²⁰¹, R²⁰² or R²⁰³ include the corresponding groups in the compounds (b1-1), (b1-2), and (b1-3) described below.

The photoacid generator may be a compound having two or more structures represented by formula (b1). For example, the photoacid generator may be a compound having a structure in which at least one of R²⁰¹ to R²⁰³ in a compound represented by formula (b1) is bound to at least one of R²⁰¹ to R²⁰³ in another compound represented by formula (b1) directly or via a connecting group.

Examples of still more preferable (b1) components include the following compounds (b1-1), (b1-2), and (b1-3).

The compound (b1-1) is an arylsulfonium compound in which at least one of R²⁰¹ to R²⁰³ in formula (b1) is an aryl group, i.e., a compound having an arylsulfonium cation.

In an embodiment, all of R²⁰¹ to R²⁰³ in the arylsulfonium compound are aryl groups. In another embodiment, some, but not all, of R²⁰¹ to R²⁰³ in the arylsulfonium compound are aryl groups, and the rest of R²⁰¹ to R²⁰³ is selected from alkyl or cycloalkyl groups.

Examples of the arylsulfonium compound include triarylsulfonium compounds, diarylalkylsulfonium compounds, aryl dialkylsulfonium compounds, diarylcycloalkylsulfonium compounds, and aryldicycloalkylsulfonium compounds.

The aryl group in the arylsulfonium compound is preferably, for example, an aryl group such as a phenyl or naphthyl group, or a heteroaryl group such as an indole or pyrrole residue. The aryl group in the arylsulfonium compound is more preferably a phenyl group or an indole residue. When the aryl sulfonium compound has two or more aryl groups, the two or more aryl groups may be the same as or different from each other.

The alkyl group that the arylsulfonium compound optionally has is preferably a straight-chain or branched alkyl group having from 1 to 15 carbon atoms such as a methyl, ethyl, propyl, n-butyl, sec-butyl, or t-butyl group. The cycloalkyl group that the arylsulfonium compound optionally has is preferably a cycloalkyl group having from 3 to 15 carbon atoms such as a cyclopropyl, cyclobutyl, or cyclohexyl group.

The aryl, alkyl, and cycloalkyl group represented by any of R²⁰¹ to R²⁰³ may have, as a substituent, an alkyl group (having, for example, from 1 to 15 carbon atoms), a cycloalkyl group (having, for example, from 3 to 15 carbon atoms), an aryl group (having, for example, from 6 to 14 carbon atoms), an alkoxy group (having, for example, from 1 to 15 carbon atoms), a halogen atom, a hydroxyl group, or a phenylthio group. Preferable examples of the substituent include straight-chain or branched alkyl groups having from 1 to 12 carbon atoms, cycloalkyl groups having from 3 to 12 carbon atoms, and straight-chain, branched or cyclic alkoxy groups having from 1 to 12 carbon atoms. Most preferred are alkyl groups having from 1 to 4 carbon atoms and alkoxy groups having from 1 to 4 carbon atoms. In an embodiment, only one of the three groups R²⁰¹ to R²⁰³ has a substituent. In another embodiment, all of R²⁰¹ to R²⁰³ have a substituent. When any of R²⁰¹ to R²⁰³ is an aryl group, the aryl group preferably has a substituent at the *p*-position.

Hereinafter, the compound (b1-2) will be described.

The compound (b1-2) is a compound represented by formula (b1) in which R²⁰¹ to R²⁰³ in formula (b1) each independently represent an organic group having no aromatic ring. The scope of the aromatic ring includes heteroatom-containing aromatic rings.

The organic group containing no aromatic ring represented by any of R²⁰¹ to R²⁰³ generally has from 1 to 30 carbon atoms, preferably from 1 to 20 carbon atoms.

R²⁰¹ to R²⁰³ each independently represent preferably an alkyl, cycloalkyl, allyl, or vinyl group, more preferably a straight-chain, branched or cyclic 2-oxoalkyl group or an alkoxycarbonylmethyl group, and particularly preferably a straight-chain or branched 2-oxoalkyl group.

The alkyl group represented by any of R²⁰¹ to R²⁰³ may be a straight-chain or branched group, and is preferably a straight-chain or branched alkyl group having from 1 to 10 carbon atoms (such as a methyl, ethyl, propyl, butyl, or pentyl group), more preferably a straight-chain or branched 2-oxoalkyl or alkoxycarbonylmethyl group.

The cycloalkyl group represented by any of R²⁰¹ to R²⁰³ is preferably a cycloalkyl group having from 3 to 10 carbon atoms (such as a cyclopentyl, cyclohexyl, or norbornyl group), more preferably a cyclic 2-oxoalkyl group.

The straight-chain, branched or cyclic 2-oxoalkyl group represented by any of R²⁰¹ to R²⁰³ is preferably a group obtained by introducing >C=O to the 2-position of any of the alkyl groups and the cycloalkyl groups described above.

The alkoxy group in the alkoxycarbonylmethyl group represented by any of R²⁰¹ to R²⁰³ is preferably an alkoxy group having from 1 to 5 carbon atoms (such as a methoxy, ethoxy, propoxy, butoxy, or pentoxy group).

The group represented by any of R²⁰¹ to R²⁰³ may be further substituted by a halogen atom, an alkoxy group (having, for example, from 1 to 5 carbon atoms), a hydroxyl group, a cyano group, or a nitro group.

The compound (b1-3) is a compound represented by the following formula (b1-3) having a phenacylsulfonium salt structure.

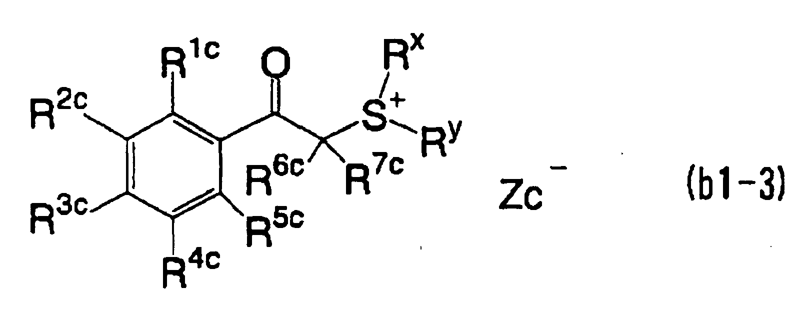

In formula (b1-3) R^{1c} to R^{5c} each independently represent a hydrogen atom, an alkyl group, a cycloalkyl group, an alkoxy group, or a halogen atom.

R^{6c} and R^{7c} each independently represent a hydrogen atom, an alkyl group, or a cycloalkyl group. R^{x} and R^{y} each independently represent an alkyl, cycloalkyl, allyl, or vinyl group.

Two or more of R^{1c} to R^{5c} may be bonded to each other to form a ring structure. R^{6c} and R^{7c} may be bonded to each other to form a ring structure. R^{x} and R^{y} may may be bonded to each other to form a ring structure.

Zc⁻ represents a non-nucleophilic anion, and examples thereof include the above-described examples of the non-nucleophilic anion represented by X^{_} in formula (b1).

The alkyl group represented by any of R^{1c} to R^{7c} may be a straight-chain or branched group, and is, for example, a straight-chain and branched alkyl group having from 1 to 20 carbon atoms, preferably having from 1 to 12 carbon atoms (such as a methyl, ethyl, straight-chain or branched propyl, straight-chain or branched butyl, or straight-chain or branched pentyl group).

The cycloalkyl group represented by any of R^{1c} to R^{7c} is preferably a cycloalkyl group having from 3 to 8 carbon atoms (such as a cyclopentyl or cyclohexyl group).

The alkoxy group represented by any of R^{1c} to R^{5c} may be a straight-chain, branched or cyclic group, and is, for example, an alkoxy group having from 1 to 10 carbon atoms, preferably, a straight-chain or branched alkoxy group having from 1 to 5 carbon atoms (such as a methoxy, ethoxy, straight-chain or branched propoxy, straight-chain or branched butoxy, or straight-chain or branched pentoxy group) or a cyclic alkoxy group having from 3 to 8 carbon atoms (such as a cyclopentyloxy or cyclohexyloxy group).

The group formed by bonding between two or more of R^{1c} to R^{5c}, between R^{6c} and R^{7c}, or between R^{x} and R^{y} is for example, a butylene group or a pentylene group. The ring structure may contain an oxygen atom, a sulfur atom, an ester bond, or an amide bond.

Preferably, any one of R^{1c} to R^{5c} is a straight-chain or branched alkyl group, a cycloalkyl group, or a straight-chain, branched, or cyclic alkoxy group, and more preferably, the total sum of the numbers of carbons of R^{1c} to R^{5c} is from 2 to 15. Such a structure is favorable, because it improves solvent solubility and prevents particle generation during storage.

The alkyl or cycloalkyl group represented by any of R^{x} and R^{y} may be selected from the alkyl or cycloalkyl groups described above as examples of R^{1c} to R^{7c}.

Each of R^{x} and R^{y} is preferably a 2-oxoalkyl group or an alkoxycarbonylmethyl group.

The 2-oxoalkyl group may be a group obtained by introducing >C=O to the 2-position of any one of the alkyl or cycloalkyl groups described above as examples of R^{1c} to R^{5c}.

The alkoxy group in the alkoxycarbonylmethyl group may be selected from the alkoxy groups described above as examples of R^{1c} to R^{5c}.

Each of R^{x} and R^{y} is preferably an alkyl or cycloalkyl group having 4 or more carbons, more preferably an alkyl or cycloalkyl group having 6 or more carbons, still more preferably an alkyl or cycloalkyl group having 8 or more carbons.

In formulae (b2) and (b3), R²⁰⁴ to R²⁰⁷ each independently represent an aryl, alkyl or cycloalkyl group. X⁻ represents a non-nucleophilic anion, and examples thereof include the non-nucleophilic anions described above as examples of X⁻ in formula (b1).

The aryl group represented by any of R²⁰⁴ to R²⁰⁷ is preferably a phenyl or naphthyl group, more preferably a phenyl group.

The alkyl group represented by any of R²⁰⁴ to R²⁰⁷ may be a straight-chain or branched group, and is preferably a straight-chain or branched alkyl group having from 1 to 10 carbon atoms (such as a methyl, ethyl, propyl, butyl, or pentyl group). The cycloalkyl group represented by any of R²⁰⁴ to R²⁰⁷ is preferably a cycloalkyl group having from 3 to 10 carbon atoms (such as a cyclopentyl, cyclohexyl, or norbornyl group).

Examples of the substituents that R²⁰⁴ to R²⁰⁷ optionally have include alkyl groups (having, for example, from 1 to 15 carbon atoms), cycloalkyl groups (having, for example, from 3 to 15 carbon atoms), aryl groups (having, for example, from 6 to 15 carbon atoms), alkoxy groups (having, for example, from 1 to 15 carbon atoms), halogen atoms, a hydroxyl group, and a phenylthio group.

Other examples of usable compounds that generate acid upon irradiation of active light or radiation rays include the compounds represented by the following formulae (b4), (b5), and (b6).

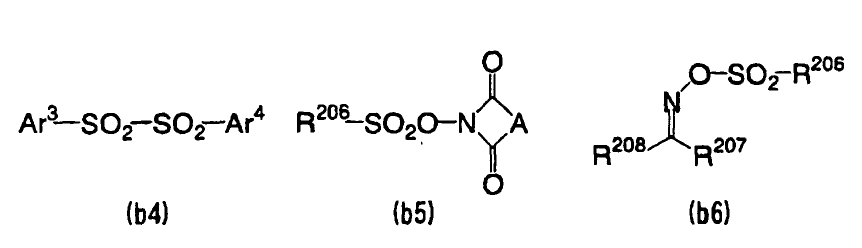

In formulae (b4) to (b6), Ar³ and Ar⁴ each independently represent an aryl group.

R²⁰⁶, R²⁰⁷ and R²⁰⁸ each independently represent an alkyl, cycloalkyl, or aryl group.

A represents an alkylene, alkenylene, or arylene group.

Preferable among the photoacid generators are the compounds represented by formulae (b1) to (b3).

Favorable examples [(b-1) to (b-96)] of the photoacid generator (b) for use in the invention will be listed below, but the invention is not limited thereto.

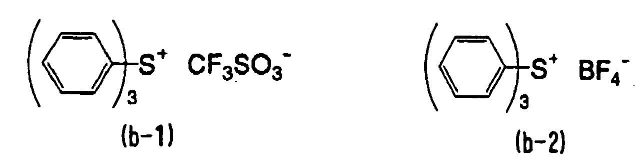

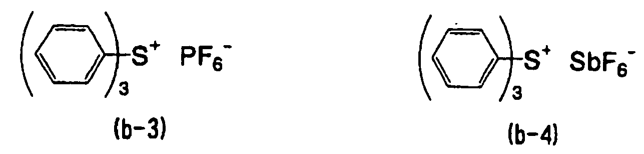

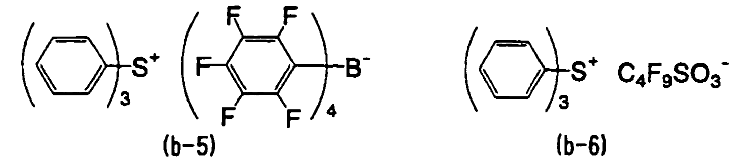

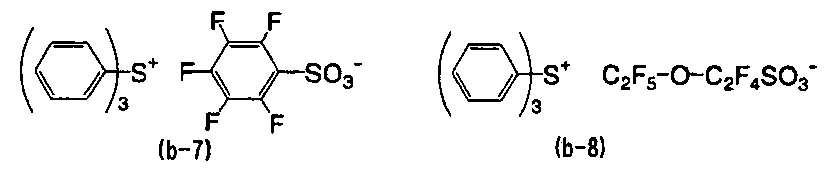

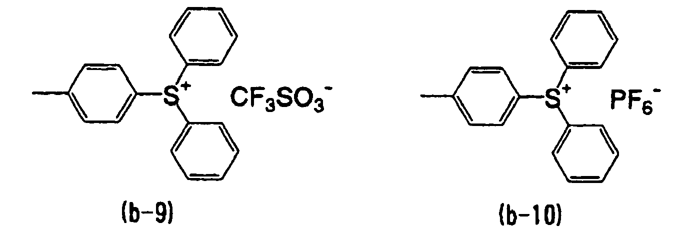

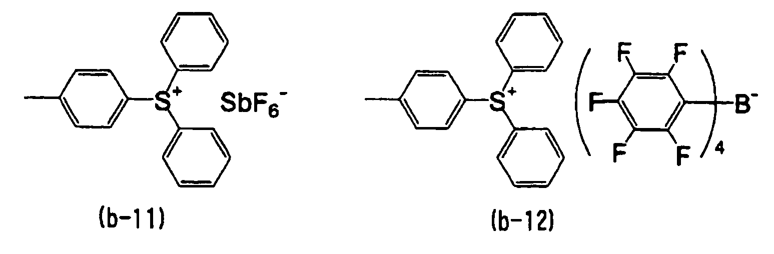

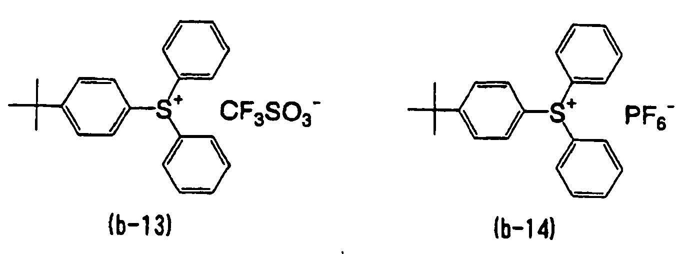

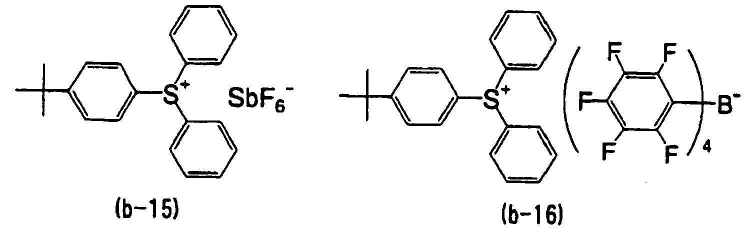

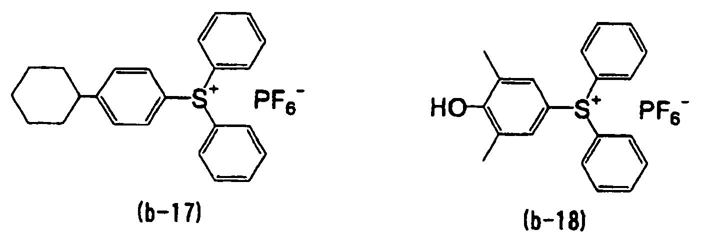

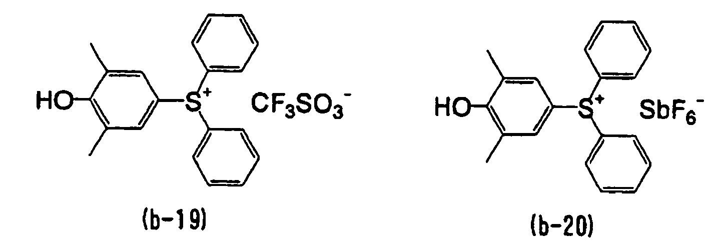

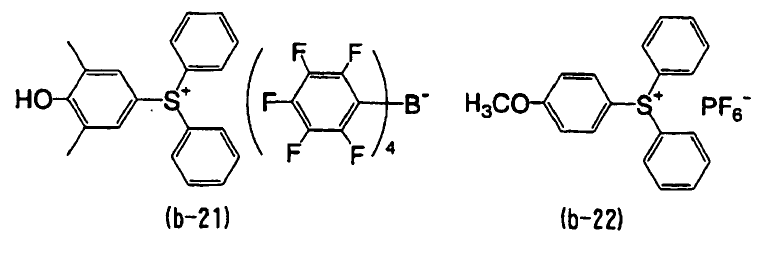

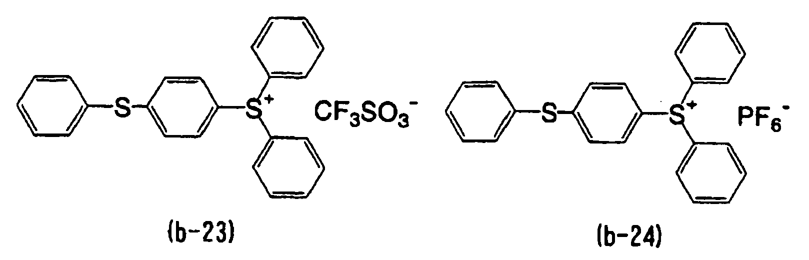

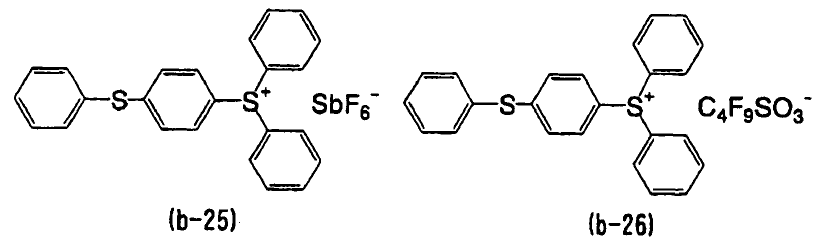

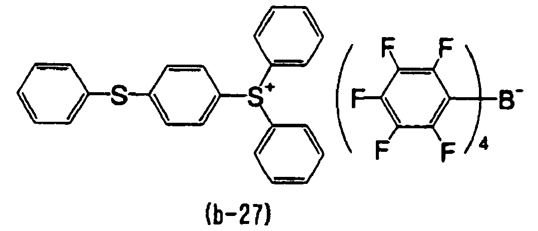

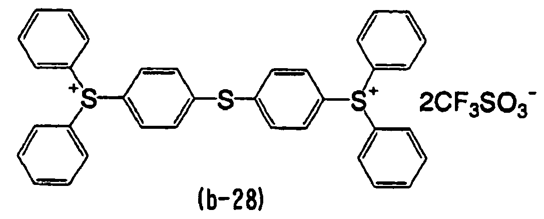

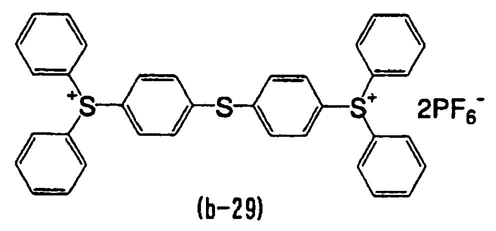

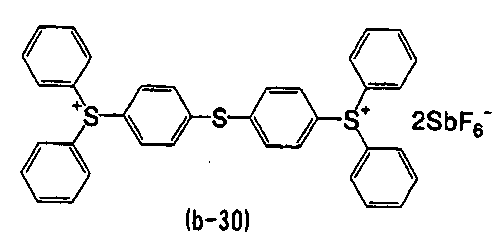

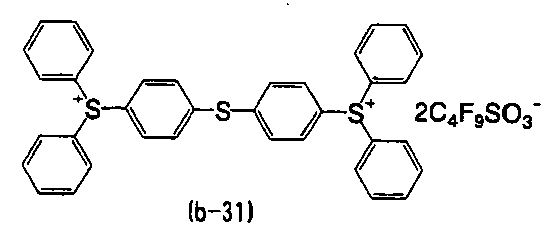

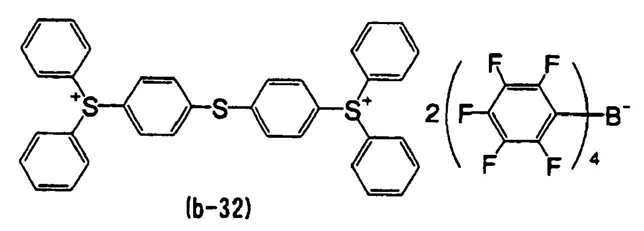

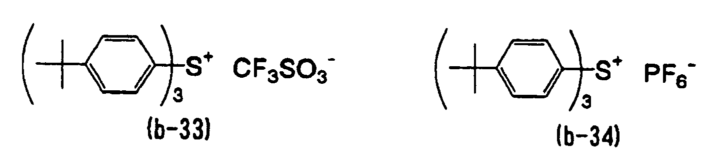

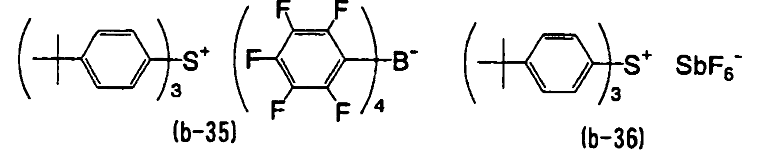

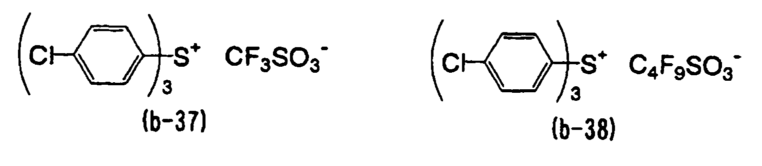

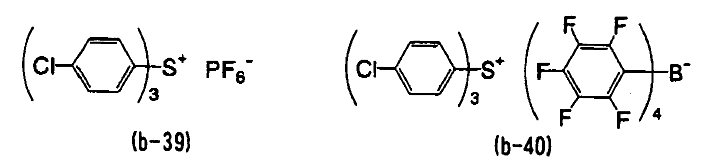

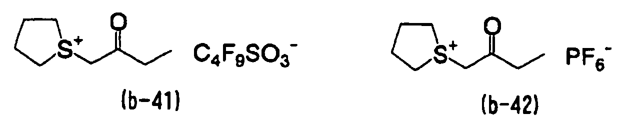

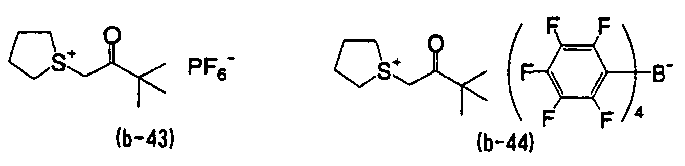

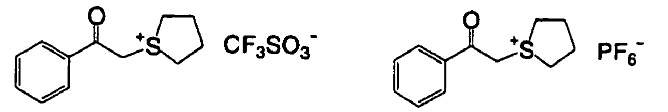

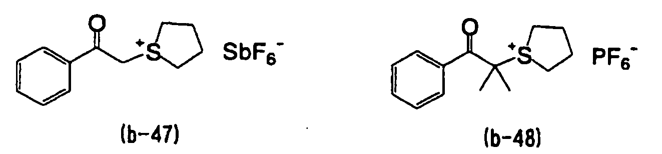

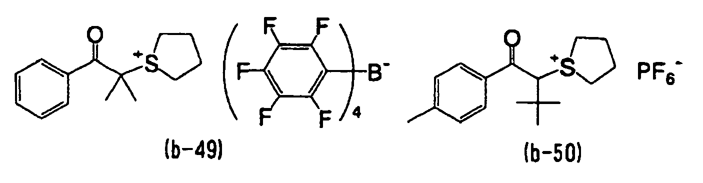

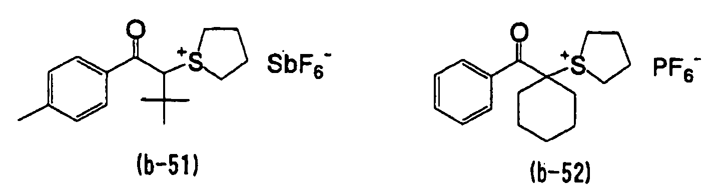

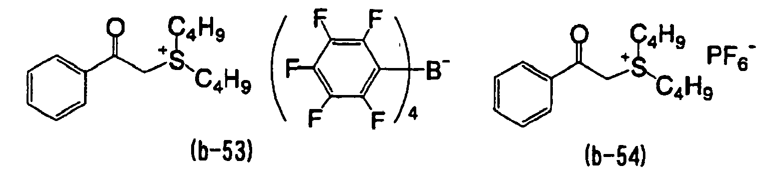

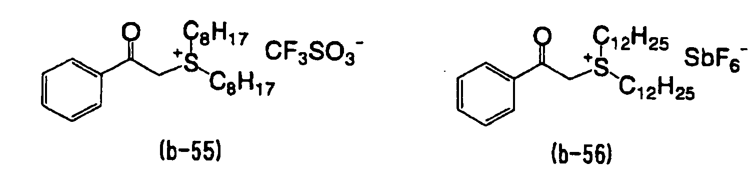

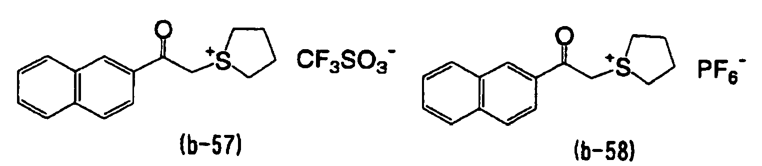

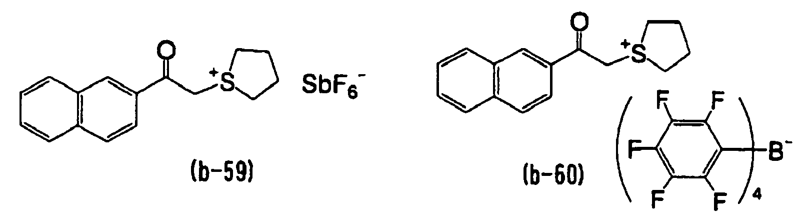

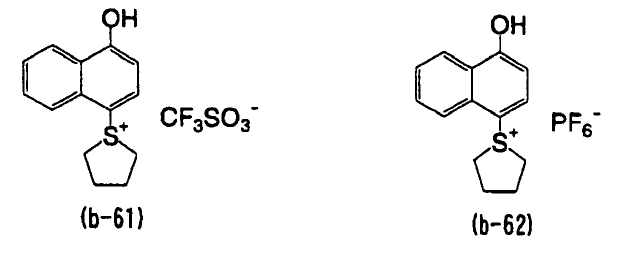

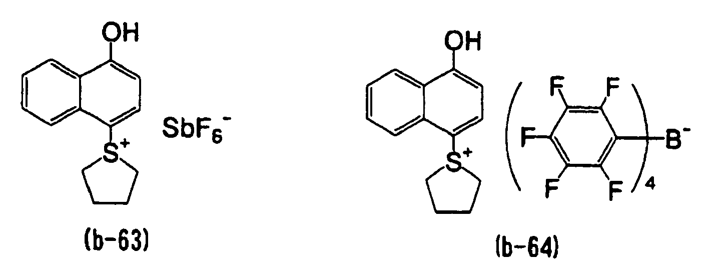

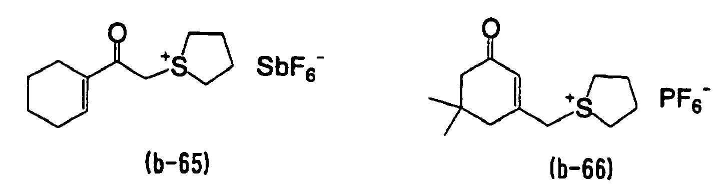

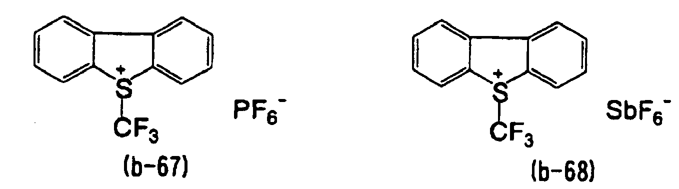

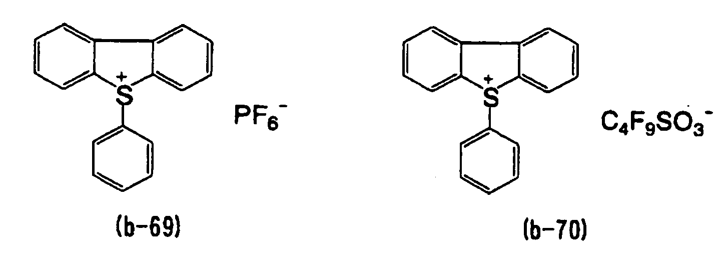

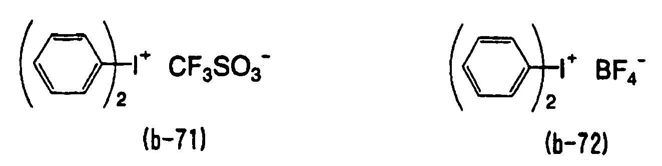

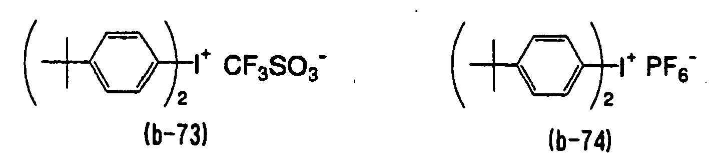

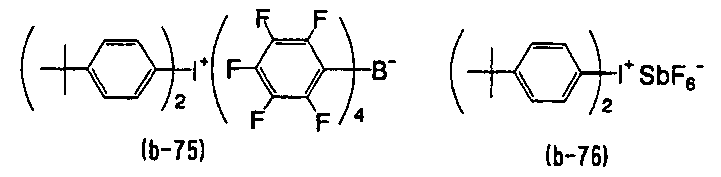

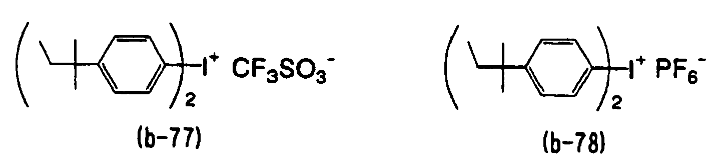

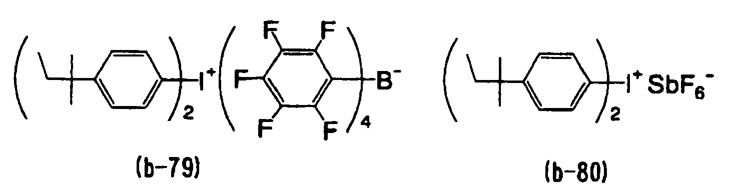

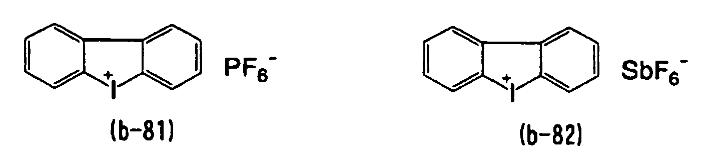

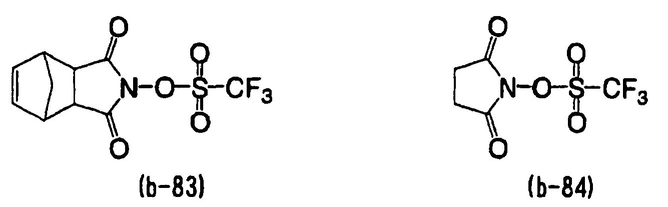

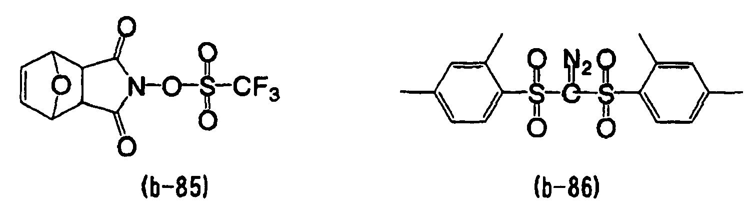

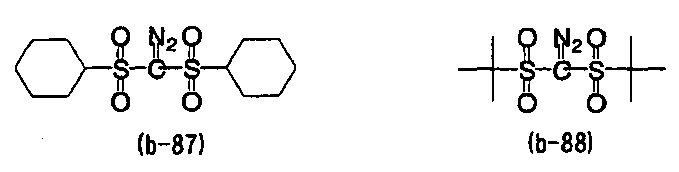

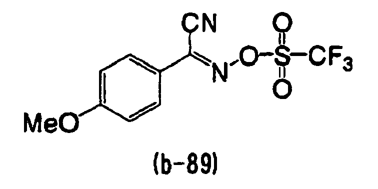

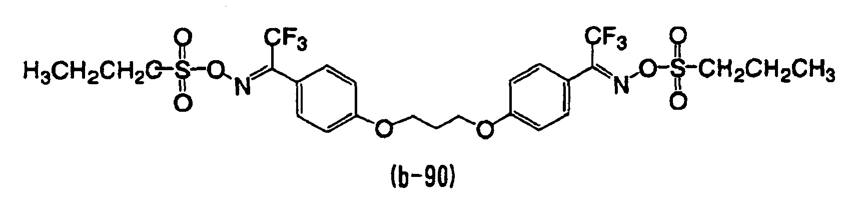

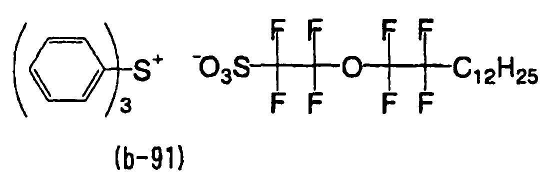

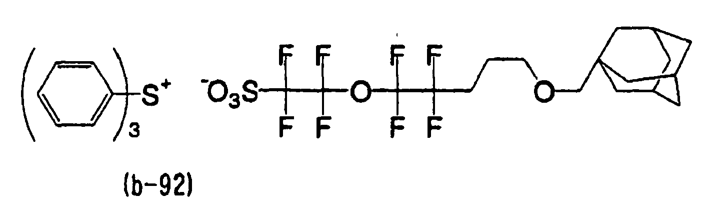

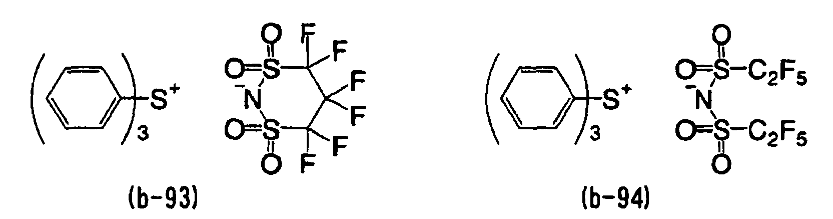

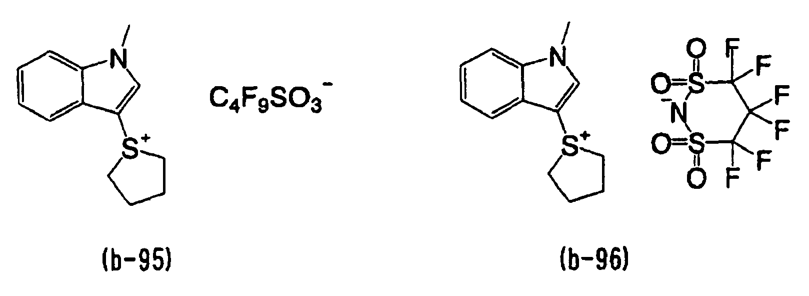

In addition, the oxazole derivatives and the s-triazine derivatives described in JP-A No. 2002-122994, paragraph numbers [0029] to [0030], can also be used favorably.

The onium salt and sulfonate compounds exemplified in JP-A No. 2002-122994, paragraph numbers [0037] to [0063], can also be used favorably in the invention.

Only one photoacid generator (b) may be used, or two or more photoacid generators (b) may be used in combination. The content of the photoacid generator (b) in the ink composition is preferably from 0.1 to 20 mass %, more preferably from 0.5 to 10 mass %, and still more preferably from 1 to 7 mass %, with respect to the total solid matter in the ink composition.

### (Colorant (c))

The ink composition according to the invention contains a colorant.

The colorant for use in the invention is not particularly limited, but pigments and oil-soluble dyes, which are superior in weather resistance and color reproducibility, are preferable, and the colorant may be selected from known colorants such as soluble dyes. The colorant favorably used in the ink composition or the inkjet recording ink composition according to the invention preferably does not function as a polymerization inhibitor in the polymerization reaction, which is the curing reaction, so that the colorant does not decrease the sensitivity of the curing reaction to active radiation rays.

### (Pigment)

The pigment is not particularly limited, and any one of common commercially available organic or inorganic pigments, dispersions of a pigment in an insoluble resin as the dispersant, or pigments whose surface has grafted resin, may be used. In addition, dyed resin particles may also be used.

Such pigments include the pigments described, for example, in Seijiro Itoh Ed., "Dictionary of Pigments" (2000), W. Herbst K. Hunger, "Industrial Organic Pigments", and JP-A Nos. 2002-12607, 2002-188025, 2003-26978, and 2003-342503.

Specific examples of the organic and inorganic pigments for use in the invention include the following. Examples of pigments of yellow color include: monoazo pigments such as C.I. Pigment Yellow 1 (Fast Yellow G, etc.) and C.I. Pigment Yellow 74; disazo pigments such as C.I. Pigment Yellow 12 (Disazo Yellow AAA, etc.) and C.I. Pigment Yellow 17; non-benzidine azo pigments such as C.I. Pigment Yellow 180; azolake pigments such as C.I. Pigment Yellow 100 (tartrazine yellow lake, etc.); condensation azo pigments such as C.I. Pigment Yellow 95 (Condensation Azo Yellow GR, etc.); acidic-dye lake pigments such as C.I. Pigment Yellow 115 (quinoline yellow lake, etc.); basic-dye lake pigments such as C.I. Pigment Yellow 18 (thioflavin lake, etc.); anthraquinone pigments such as fravantrone yellow (Y-24); isoindolinone pigments such as isoindolinone yellow 3RLT (Y-110); quinophtharone pigments such as quinophtharone yellow (Y-138); isoindoline pigments such as isoindoline yellow (Y-139); nitroso pigments such as C.I. Pigment Yellow 153 (nickel nitroso yellow, etc.); and metal-complex-salt azomethine pigments such as C.I. Pigment Yellow 117 (copper azomethine yellow, etc.).

Examples of red or magenta pigments include: monoazo pigments such as C.I. Pigment Red 3 (toluidine red, etc.); disazo pigments such as C.I. Pigment Red 38 (Pyrazolone Red B, etc.); azolake pigments such as C.I. Pigment Red 53:1 (Lake Red C, etc.) and C.I. Pigment Red 57:1 (Brilliant Carmine 6B); condensation azo pigments such as C.I. Pigment Red 144 (Condensation Azo Red BR, etc.); acidic dye lake pigments such as C.I. Pigment Red 174 (Phloxine B Lake, etc.); basic dye lake pigments such as C.I. Pigment Red 81 (Rhodamine 6G' Lake, etc.); anthraquinone pigments such as C.I. Pigment Red 177 (dianthraquinolyl red, etc.); thioindigo pigments such as C.I. Pigment Red 88 (Thioindigo Bordeaux, etc.); perynone pigments such as C.I. Pigment Red 194 (perynone red, etc.); perylene pigments such as C.I. Pigment Red 149 (perylene scarlet, etc.); quinacridone pigments such as C.I. Pigment Violet 19 (unsubstituted quinacridone) and C.I. Pigment Red 122 (quinacridone magenta, etc.); isoindolinone pigments such as C.I. Pigment Red 180 (Isoindolinone Red 2BLT, etc.); and alizarin lake pigments such as C.I. Pigment Red 83 (madder lake, etc.).

Examples of blue or cyan pigments include disazo pigments such as C.I. Pigment Blue 25 (dianisidine blue, etc.); phthalocyanine pigments such as C.I. pigment blue 15 (phthalocyanine blue, etc.); acidic dye lake pigments such as C.I. pigment blue 24 (peacock blue lake, etc.); basic dye lake pigments such as C.I. Pigment Blue 1 (Victoria Pure Blue BO Lake, etc.); anthraquinone pigments such as C.I. pigment blue 60 (indanthron blue, etc.); and alkali blue pigments such as C.I. Pigment Blue 18 (alkali blue V-5:1).

Examples of green pigments include phthalocyanine pigments such as C.I. Pigment Green 7 (phthalocyanine green) and C.I. Pigment Green 36 (phthalocyanine green); and azo metal complex pigments such as C.I. Pigment Green 8 (nitroso green).
Examples of orange pigments include isoindoline pigments such as C.I. Pigment Orange 66 (isoindoline orange); and anthraquinone pigments such as C.I. Pigment Orange 51 (dichloropyranthron orange).

Examples of black pigments include carbon black, titanium black, and aniline black.

Specific examples of white pigments include basic lead carbonate (2PbCO₃Pb(OH)₂, so-called silver white), zinc oxide (ZnO, so-called zinc white), titanium oxide (TiO₂, so-called titanium white), and strontium titanate (SrTiO₃, so-called titanium strontium white).

Since titanium oxide has a lower specific gravity and a higher refractive index than other white pigments and is more stable chemically or physically, titanium oxide has a greater masking and coloring potential as a pigment, and is further excellent in resistance to acid or alkali and other environmental factors. Thus, the use of titanium oxide as a white pigment is preferable. Of course, other white pigments (including white pigments other than those described above) may be used as necessary.

For dispersing the pigment, dispersing machines such as a ball mill, a sand mill, an attriter, a roll mill, a jet mill, a homogenizer, a paint shaker, a kneader, an agitator, a Henschel mixer, a colloid mill, an ultrasonic wave homogenizer, a pearl mill, and a wet jet mill, may be used.

In an embodiment, a dispersant is added when dispersing the pigment. Examples of the dispersant include carboxylic acid esters containing hydroxyl groups, salts of a long-chain polyaminoamide with a high-molecular weight acid ester, high-molecular weight polycarboxylic acid salts, high-molecular weight unsaturated acid esters, copolymers, modified polyacrylates, aliphatic polyvalent carboxylic acids, naphthalenesulfonic acid formalin condensates, polyoxyethylene alkyl phosphoric esters, and pigment derivatives. Use of a commercially available polymer dispersant, for example a SOLSPERSE series product of Zeneca, is also preferable.

A synergist suitable for the pigment may be used as a dispersing aid. The amount of the dispersant and dispersing aid is preferably from 1 to 50 parts by weight per 100 parts by weight of the pigment.

To the ink composition, a solvent may be added as the dispersion medium for various components such as pigment; or the cation-polymerizable compound, which is a low-molecular-weight component, may be used as a solvent-free dispersion medium. The ink composition according to the invention is preferably free of solvent because the composition is a radiation-curable ink that is cured after being applied onto a recording medium. If the solvent remains in the cured ink image, solvent resistance may be deteriorated and a problem of VOC (Volatile Organic Compound) may occur due to the remaining solvent. Thus, the dispersion medium is preferably a cation-polymerizable compound, particularly preferably a cation-polymerizable monomer that has the lowest viscosity, in view of the improvement in the dispersibility and handling property of the ink composition.

The average diameter of the pigment particles is preferably from 0.02 to 0.4 µm, more preferably from 0.02 to 0.1 µm, and still more preferably from 0.02 to 0.07 µm. It is preferable to select the pigment, dispersant, and dispersion medium and determine the dispersion and filtration conditions such that the average particle diameter of the pigment particles falls within the above-described range. The control of the particle diameter enables suppression of the clogging of head nozzles, and preservation of the storage stability, transparency and curing sensitivity of the ink.

### (Dye)

The dye for use the invention is preferably soluble in oil. Specifically, the dye preferably has a solubility in water (weight of the colorant dissolved in 100 g of water) of 1 g or less at 25°C, preferably 0.5 g or less, and more preferably 0.1 g or less. Accordingly, so-called water-insoluble oil-soluble dyes are used advantageously.

In the invention, it is preferable to introduce an oil-solubilizing group to the dye mother nucleus such as described above, to ensure that the required amount of dye is dissolved in the ink composition. Examples of the oil-solubilizing group include long-chain branched alkyl groups, long-chain branched alkoxy groups, long-chain branched alkylthio groups, long-chain branched alkylsulfonyl groups, long-chain branched acyloxy groups, long-chain branched alkoxycarbonyl groups, long-chain branched acyl groups, long-chain branched acylamino groups, long-chain branched alkylsulfonylamino groups, long-chain branched alkylaminosulfonyl groups, as well as aryl, aryloxy, aryloxycarbonyl, arylcarbonyloxy, arylaminocarbonyl, arylaminosulfonyl, and arylsulfonylamino groups each containing a long-chain branched substituent selected from the above long-chain branched substituents.

In an embodiment, a water-soluble dye containing carboxylic acid or sulfonic acid is treated with a long-chain branched alcohol, amine, phenol, or aniline derivative to give a dye having an oil-solubilizing group, such as alkoxycarbonyl group, aryloxycarbonyl group, alkylaminosulfonyl group or arylaminosulfonyl group.

The oil-soluble dye preferably has a melting point of 200°C or lower, more preferably 150°C or lower, and still more preferably 100°C or lower. When a low-melting point oil-soluble dye is used, crystal precipitation of the colorant in the ink composition is suppressed to improve the storage stability of the ink composition.

The dye preferably has a high oxidation potential because a higher oxidation potential improves curing property and the resistance to color deterioration, in particular the resistance to oxidative substances such as ozone. Thus, the oil-soluble dye for use in the invention preferably has an oxidation potential of 1.0 V or more (vs. SCE). The oxidation potential is preferably higher, and preferably 1.1 V or more (vs. SCE), and more preferably 1.15 V or more (vs. SCE).

The yellow dyes having the structure represented by formula (Y-I) described in JP-A 2004-250483 are preferable.

Examples of preferable dyes include the dyes represented by formulae (Y-II) to (Y-IV) described in JP-A No. 2004-250483, paragraph No. [0034], and specific examples thereof include the compounds described in JP-A No. 2004-250483, paragraph Nos. [0060] to [0071]. The oil-soluble dyes represented by formula (Y-I) described therein may be used not only for yellow ink but also for inks in any other colors such as black or red inks.

Magenta dyes are preferably selected from the compounds having the structures represented by formulae (3) and (4) described in JP-ANo. 2002-114930, and specific examples thereof include the compounds described in JP-A No. 2002-114930, paragraph Nos. [0054] to [0073].

Particularly preferable dyes include the azo dyes represented by formulae (M-1) to (M-2) described in JP-A No. 2002-121414, paragraph Nos. [0084] to [0122], and specific examples thereof include the compounds described in JP-A No. 2002-121414, paragraph Nos. [0123] to [0132]. The oil-soluble dyes represented by formulae (3), (4), and (M-1) to (M-2) described in JP-A No. 2002-121414 may be used not only for magenta ink but also inks in any other colors such as black or red inks.

Cyan dyes are preferably selected from the dyes represented by formulae (I) to (IV) described in JP-ANo. 2001-181547 and the dyes represented by formulae (IV-1) to (IV-4) in JP-ANo. 2002-121414, paragraph Nos. [0063] to [0078], and specific examples thereof include the compounds described in JP-A 2001-181547, paragraph Nos. [0052] to [0066] and in JP-A 2002-121414, paragraph Nos. [0079] to [0081].

Particularly preferable dyes include the phthalocyanine dyes represented by formulae (C-I) and (C-II) described in JP-ANo. 2002-121414, paragraph Nos. [0133] to [0196]. The phthalocyanine dyes represented by formula (C-II) are still more preferable. Specific examples thereof include the compounds described in JP-A No. 2002-121414, paragraph Nos. [0198] to [0201]. The oil-soluble dyes represented by formulae (I) to (IV), (IV-1) to (IV-4), (C-I), and (C-II) may be used not only for cyan ink but also for inks in any other colors such as black or green inks.

### -Oxidation potential-

The oxidation potential (Eox) of the dye according to the invention can be determined easily by those skilled in the art. These methods are described, for example, in P. Delahay, "New Instrumental Method in Electrochemistry" (1954, Interscience Publishers), A. J. Bard et al., "Electrochemical Methods" (1980, John Wiley & Sons), and Akira Fujishima et al., "Electrochemical Measurement Methods" (1984, Gihodo Shuppan), the disclosures of which are incorporated herein by reference. Specifically, the oxidation potential is determined as follows: First, an oxidation wave is obtained by dissolving a test sample at a concentration of 1×10⁻² to 1×10⁻⁶ mole/liter in a solvent such as dimethylformamide or acetonitrile containing a supporting electrolyte such as sodium perchlorate or tetrapropylammonium perchlorate and then applying a voltage to the anodic side (higher side) by using carbon (GC) as the working electrode and a revolving platinum electrode as the counter electrode in a cyclic voltammeter or a direct-current polarographic apparatus; the oxidation wave is approximated by a straight line; the point at the intersection of the approximate line with the residual current-potential line is determined, and the point at the intersection of the approximate line with the saturated current line (or with the line which is in parallel with the vertical axis and which passes through the peak electric potential) is also determined; and the potential at the midpoint between the determined two points is determined as a value relative to SCE (saturated calomel electrode). The value may deviate to the extent of approximately several dozen millivolts under the influence of the difference in potential between liquids and the resistivity of the sample solution, but it is possible to assure the reproducibility of the electric potential by using a standard sample (e.g., hydroquinone). The supporting electrolyte and the solvent may be selected suitably according to the oxidation potential and solubility of the test sample. The supporting electrolyte and the solvent for use are described in Akira Fujishima et al., "Electrochemical Measurement Methods" (1984, Gihodo Shuppan) pp. 101 to 118, the disclosure of which is incorporated herein by reference.

Specific examples of dyes that can be used advantageously in the invention are shown below, but the dyes usable in the invention are not limited to the following specific examples.

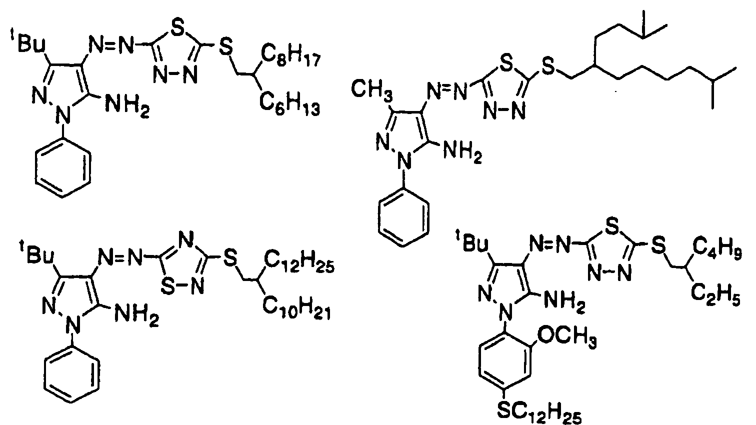

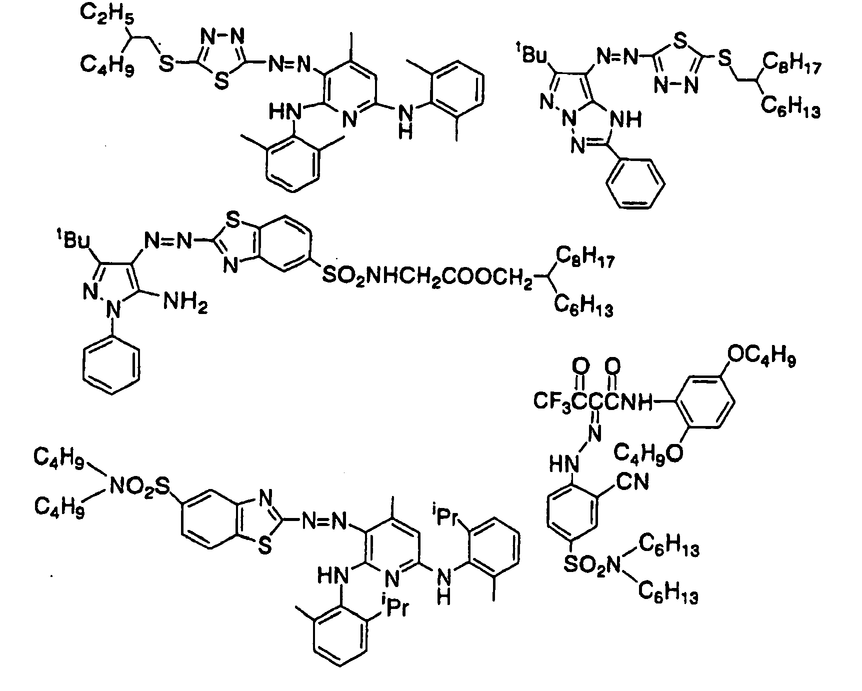

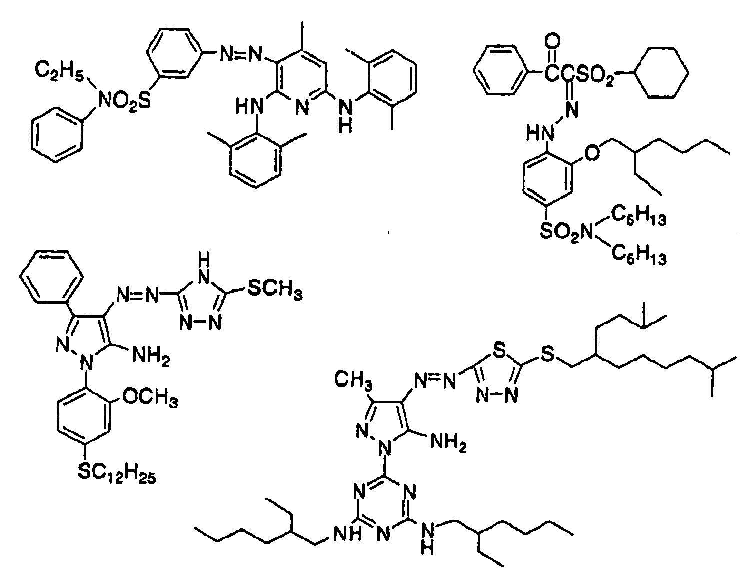

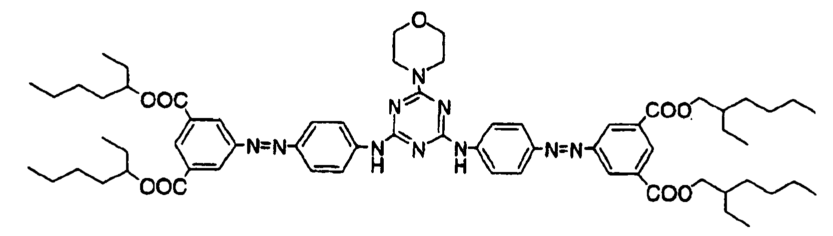

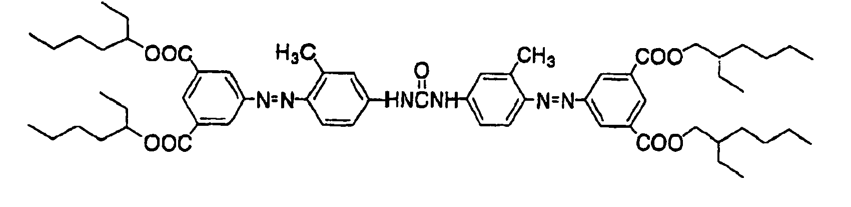

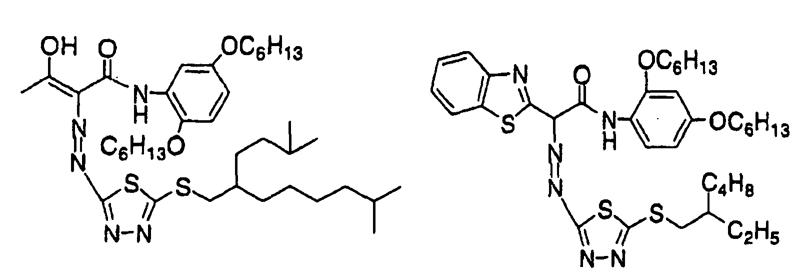

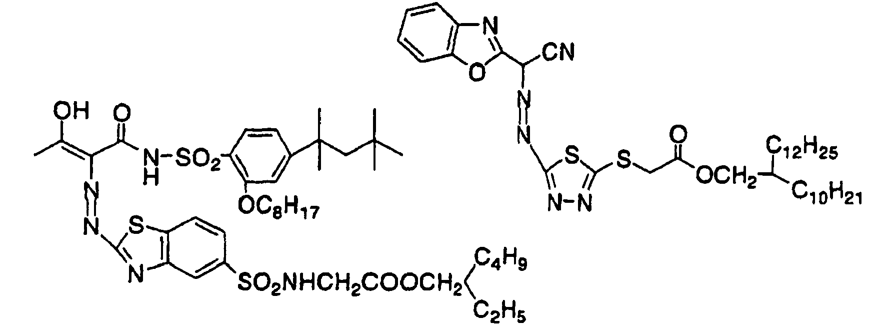

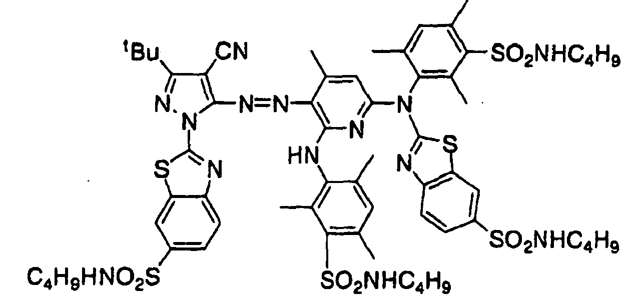

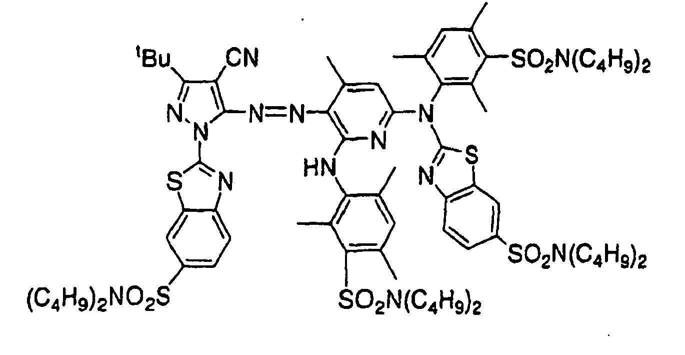

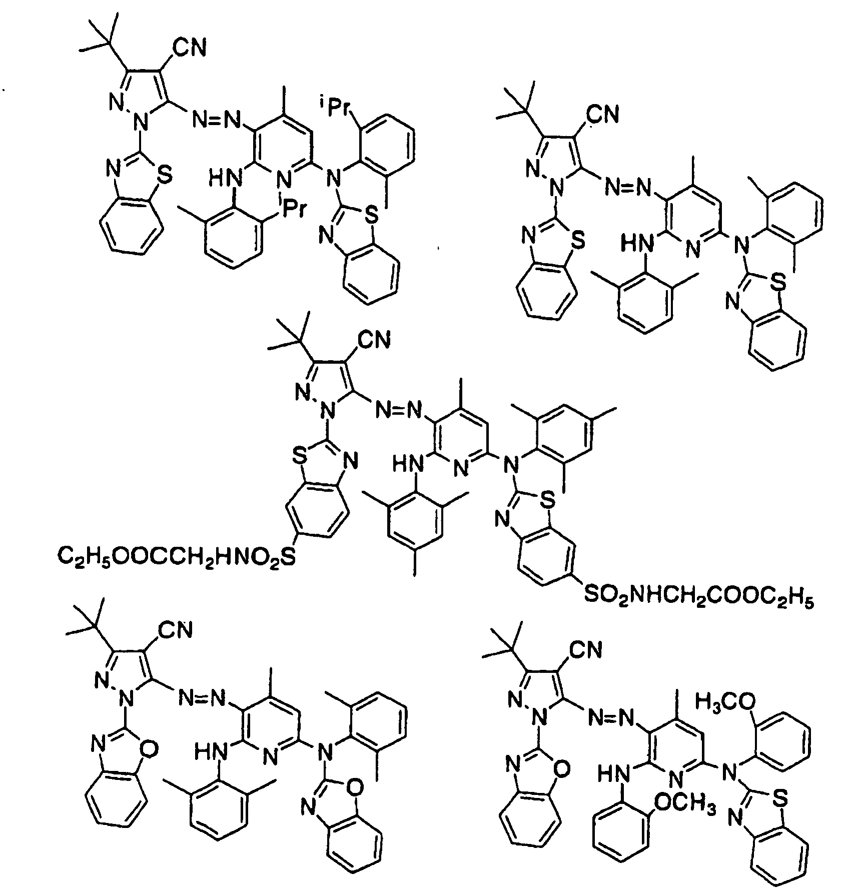

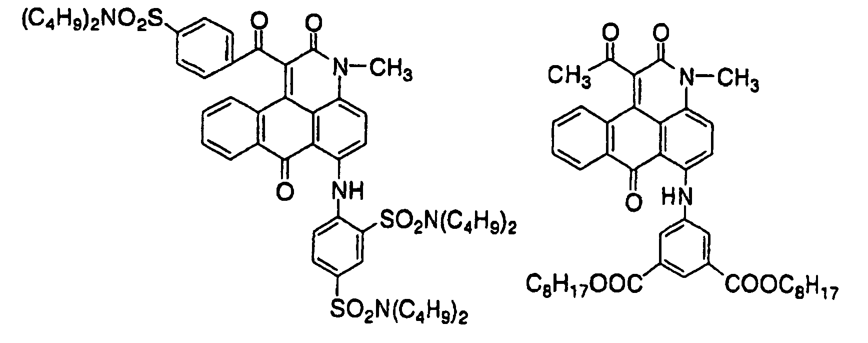

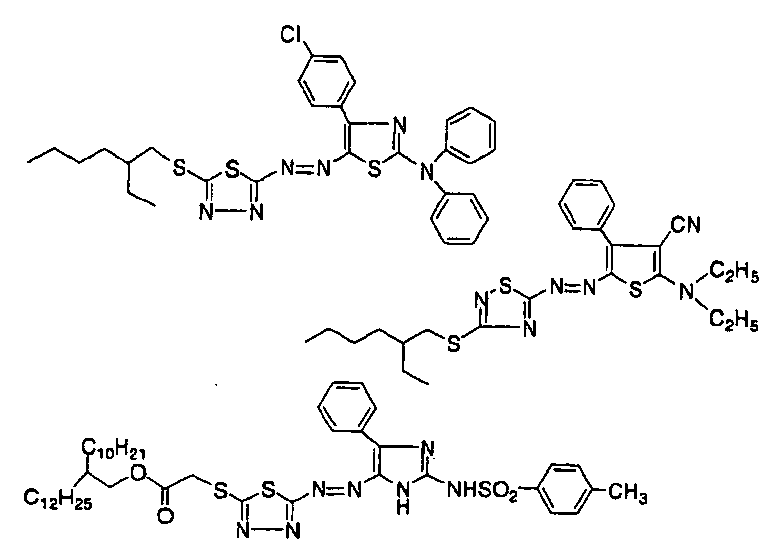

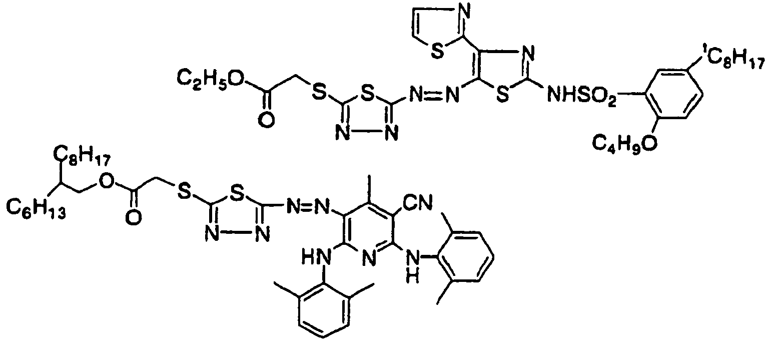

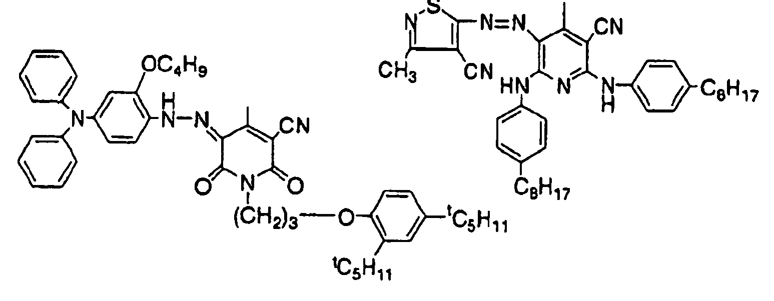

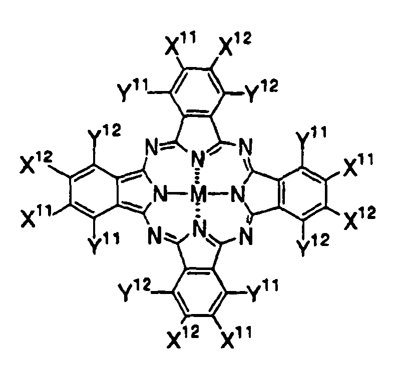

| No. | M | X¹¹ | X¹² | Y¹¹, Y¹² |
|---|---|---|---|---|
| e-1 | Cu | 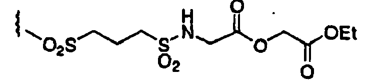 | H | H, H |
| e-2 | Cu | 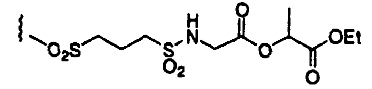 | H | H, H |
| e-3 | Cu | 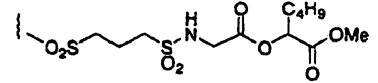 | H | H, H |
| e-4 | Cu | 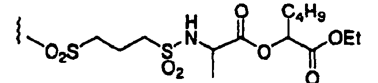 | H | H, H |
| e-5 | Cu | 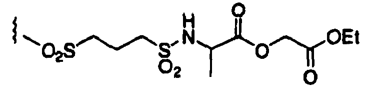 | H | H, H |
| e-6 | Cu | 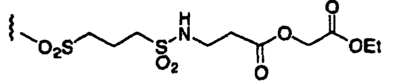 | H | H, H |
| e-7 | Cu | 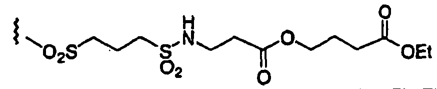 | H | H, H |
| e-8 | Cu | 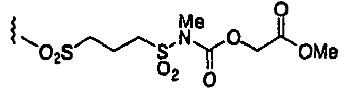 | H | H, H |

In the formula above, specific examples of the pairs of (X¹¹ and X¹²) and (Y¹¹ and Y¹²) are respectively in no particular order.

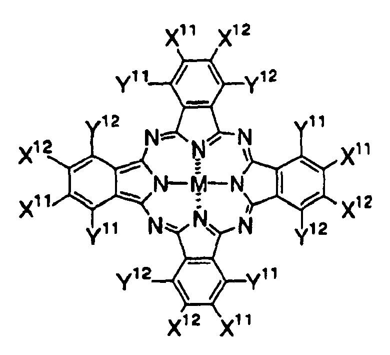

| No. | M | X¹¹ | X¹² | Y¹¹, Y¹² |
|---|---|---|---|---|
| e-9 | Cu | 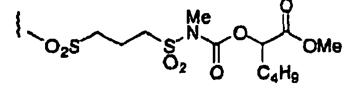 | H | H, H |
| e-10 | Cu | 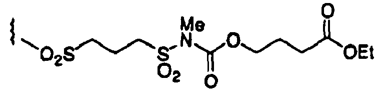 | H | H, H |
| e-11 | Cu | 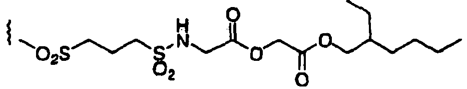 | H | H, H |
| e-12 | Cu | 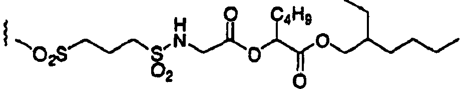 | H | H, H |
| e-13 | Cu | 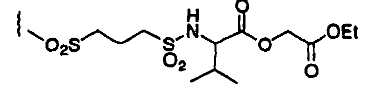 | H | H, H |
| e-14 | Cu | 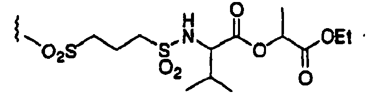 | H | H, H |
| e-15 | Cu | 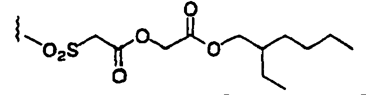 | H | H, H |
| e-16 | Cu | 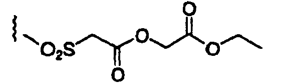 | H | H, H |

In the formula above, specific examples of the pairs of (X¹¹ and X¹²) and (Y¹¹ and Y¹²) are respectively in no particular order.

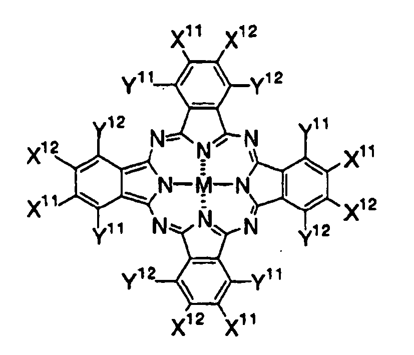

| No. | M | X¹¹ | X¹² | Y¹¹,Y¹² |
|---|---|---|---|---|
| e-17 | Cu | 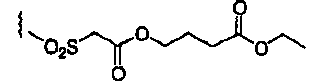 | H | H, H |
| e-18 | Cu | 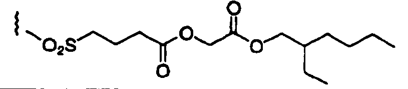 | H | H, H |
| e-19 | Cu | 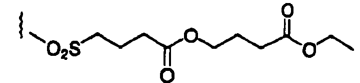 | H | H, H |
| e-20 | Cu | 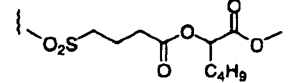 | H | H, H |
| e-21 | Cu | 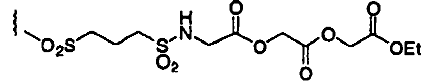 | H | H, H |
| e-22 | Cu | 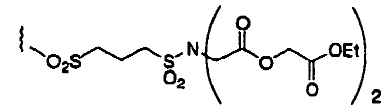 | H | H, H |
| e-23 | Cu | 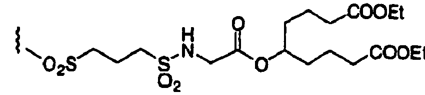 | H | H, H |

In the formula above, specific examples of the pairs of (X¹¹ and X¹²) and (Y¹¹ and Y¹²) are respectively in no particular order.

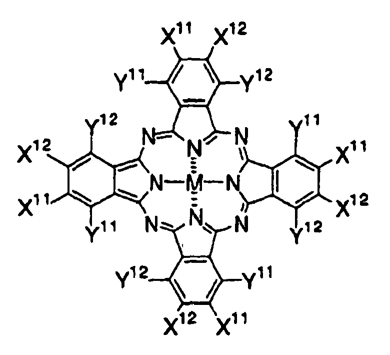

| No. | M | X¹¹ | X¹² | Y¹¹, Y¹² |
|---|---|---|---|---|
| e-24 | Cu | 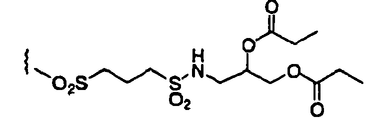 | H | H,H |
| e-25 | Cu | 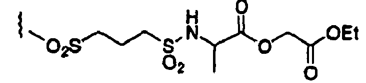 | H | H,Cl |
| e-26 | Cu | 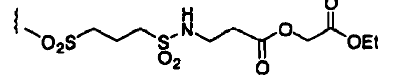 | H | H,Cl |
| e-27 | Cu | 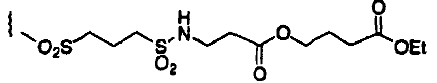 | H | H,Cl |
| e-28 | Cu | 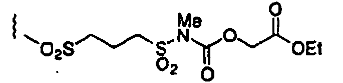 | H | H,Cl |
| e-29 | Cu | 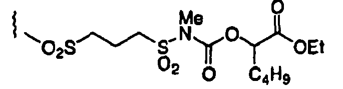 | H | H,Cl |
| e-30 | Cu | 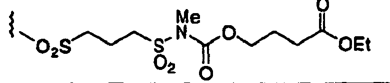 | H | H,Cl |

In the formula above, specific examples of the pairs of (X¹¹ and X¹²) and (Y¹¹ and Y¹²) are respectively in no particular order.

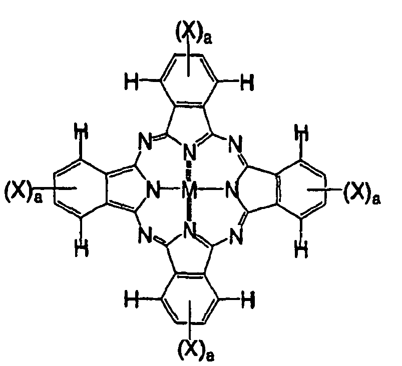

| No. | M | X | a |
|---|---|---|---|
| e-31 | Cu | 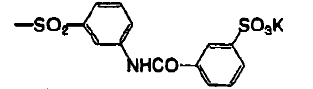 | 1 |
| e-32 | Cu | 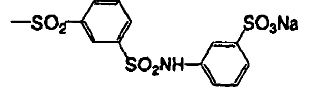 | 1 |
| e-33 | Cu | 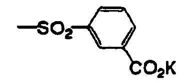 | 1 |
| e-34 | Ni | 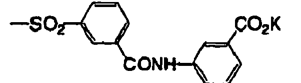 | 1 |
| e-35 | Cu | 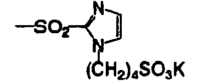 | 1 |
| e-36 | Cu | 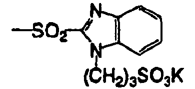 | 1 |
| e-37 | Cu | 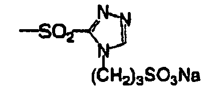 | 1 |
| e-38 | Cu | 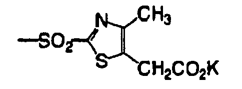 | 1 |

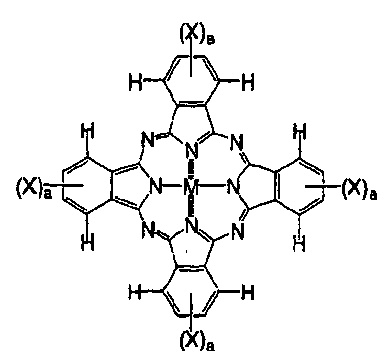

| No. | M | X | a |
|---|---|---|---|
| e-39 | Cu | 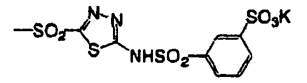 | 1 |
| e-40 | Cu | 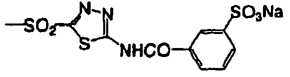 | 1 |
| e-41 | Cu | 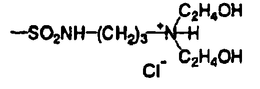 | 1 |
| e-42 | Cu | 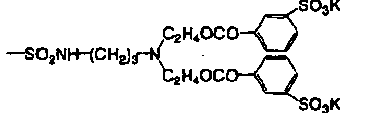 | 1 |
| e-43 | Cu | 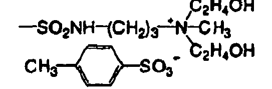 | 1 |
| e-44 | Cu | 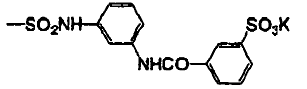 | 1 |
| e-45 | Cu | 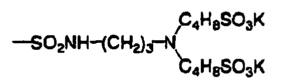 | 1 |
| e-46 | Ni | 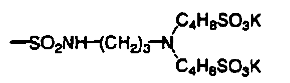 | 1 |

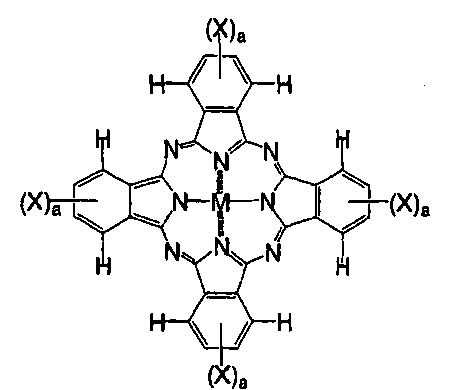

| No. | M | X | a |
|---|---|---|---|
| e-47 | Zn | 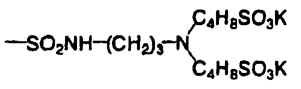 | 1 |
| e-48 | Cu | 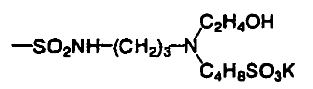 | 1 |
| e-49 | Cu | 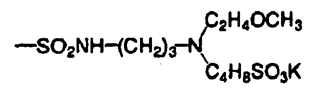 | 1 |
| e-50 | Cu | 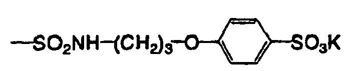 | 1 |

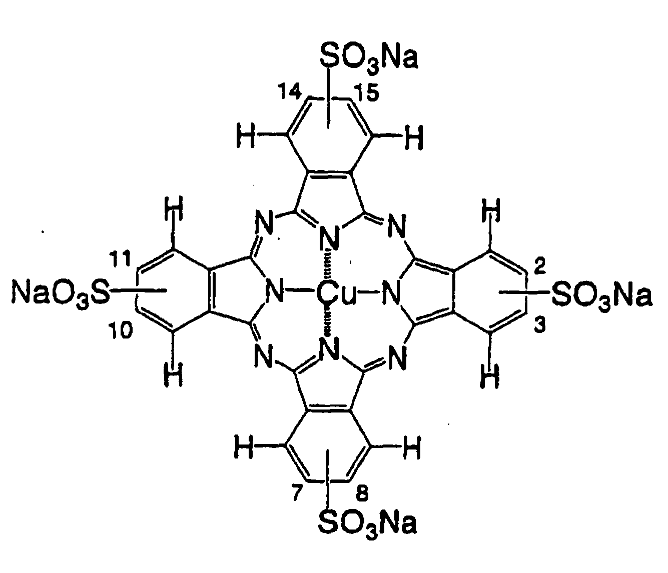

The content of the colorant in the composition is preferably from 1 to 20 wt %, more preferably from 2 to 10 wt %, in terms of the solid content.

### (Other components)

Hereinafter, various additives that may be used, as necessary, in the invention will be described.

### (Ultraviolet absorbent)

An ultraviolet absorbent may be used in the invention from the viewpoint of improvement in the weather fastness of the obtained image and the prevention of the discoloration of the image.

Examples of the ultraviolet absorbent include: the benzotriazole compounds described in JP-ANos. 58-185677, 61-190537, 2-782, 5-197075 and 9-34057; the benzophenone compounds described in JP-A Nos. 46-2784 and 5-194483 and U.S. Patent No. 3214463; the cinnamic acid compounds described in JP-B Nos. 48-30492 and 56-21141 and JP-A No. 10-88106; the triazine compounds described in JP-A Nos. 4-298503, 8-53427, 8-239368, 10-182621, and 8-501291; the compounds described in Research Disclosure No. 24239; and compounds (so-called fluorescent brighteners) that emit fluorescent light when absorbing ultraviolet rays, such as stilbene and benzoxazole compounds. The addition amount may be decided adequately according to applications, a content of 0.5 to 15 wt % in terms of solid content is generally preferable.

### (Sensitizer)

A sensitizer may be added as needed to the ink composition according to the invention, for improvement in acid-generating efficiency of the photoacid generator and for increasing the wavelength to which the ink composition is sensitive. The sensitizer is not particularly limited if it sensitizes the photoacid generator in the electron- or energy-transfer mechanism. Favorable examples thereof include aromatic condensed polycyclic compounds such as anthracene, 9,10-dialkoxyanthracene, pyrene, and perylene; aromatic ketone compounds such as acetophenone, benzophenone, thioxanthone, and Michler's ketone; and heterocyclic ring compounds such as phenothiazine and N-aryloxazolidinones. The addition amount is decided adequately according to applications, but preferably from 0.01 to 1 mol %, more preferably from 0.1 to 0.5 mol %, based on the amount of the photoacid generator.

### (Antioxidant)

An antioxidant may be added to the composition according to the invention for improvement in stability. Examples of the antioxidant include the antioxidants described in EP Patent Application Publication Nos. 223739, 309401, 309402 310551, 310552 and 459416, German Patent Application Publication No. 3435443, JP-A Nos. 54-48535, 62-262047, 63-113536, 63-163351, 2-262654, 2-71262, 3-121449, 5-61166 and 5-119449 and U.S. Patent Nos. 4814262 and 4980275. The amount of the antioxidant to be added may be decided suitably according to the purpose, but is preferably from 0.1 to 8 wt % in terms of the solid content.

### (Anti-fading agent)

The ink composition according to the invention may further contain an anti-fading agent selected from various organic anti-fading agents and metal complex anti-fading agents. Examples of organic anti-fading agents include hydroquinones, alkoxyphenols, dialkoxyphenols, phenols, anilines, amines, indanes, chromanes, alkoxyanilines, and heterocyclic rings. Examples of metal-complex anti-fading agents include nickel complexes and zinc complexes, and specific examples thereof include the compounds described in the patents cited in section VII, items I to J in Research Disclosure No.17643; Research Disclosure No. 15162; Research Disclosure, No. 18716, p. 650 (left column); Research Disclosure, No. 36544, p. 527; Research Disclosure, No. 307105, p. 872; and Research Disclosure, No. 15162; and the compounds represented by the formulae for the representative compounds described in JP-A No. 62-215272, pp. 127 to 137 and the exemplary compounds described in JP-A No. 62-215272, pp. 127 to 137.

The amount of the anti-fading agent to be added may be decided adequately according to the purpose, but is preferably from 0.1 to 8 wt % in terms of the solid content.

### (Conductive salt)

A conductive salt such as potassium thiocyanate, lithium nitrate, ammonium thiocyanate, or dimethylamine hydrochloride salt may be added to the ink composition according to the invention so as to control the ejection properties.

### (Solvent)

Addition of an extremely small amount of organic solvent to the ink composition of the invention is effective for the improvement in the adhesiveness to the recording medium.

Examples of the solvent include ketone solvents such as acetone, methylethylketone, and diethylketone; alcohol solvents such as methanol, ethanol, 2-propanol, 1-propanol, 1-butanol, and tert-butanol; chlorine-based solvents such as chloroform and methylene chloride; aromatic solvents such as benzene and toluene; ester solvents such as ethyl acetate, butyl acetate, and isopropyl acetate; ether solvents such as diethylether, tetrahydrofuran, and dioxane; and glycol ether solvents such as ethylene glycol monomethylether and ethylene glycol dimethylether.

In such a case, the amount of the solvent to be added is in the range that does not cause problems of solvent resistance or VOC, and thus, preferably in the range of 0.1 to 5 wt %, more preferably 0.1 to 3 wt %, based on the entire ink composition.

### (Polymer compound)

The ink composition according to the invention may further contain a polymer compound selected from various polymer compounds for the purpose of the adjustment of the film physical properties. Examples of polymer compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinyl resins, acrylic resins, rubber resin, waxes, and other natural resins. In an embodiment, two or more polymer compounds are used simultaneously. Among them, vinyl copolymers obtained by copolymerization of acrylic monomers are preferable. In addition, copolymers containing a "monomer containing a carboxyl group", an "alkyl methacrylate ester", or an "alkyl acrylate ester" as a structural unit are also used advantageously as a copolymerization component for the polymer binder.

### (Surfactant)

A surfactant may be added to the ink composition according to the invention. The surfactant may be selected from the surfactants described in JP-A Nos. 62-173463 and 62-183457. Examples thereof include anionic surfactants such as dialkylsulfosucccinic acid salts, alkylnaphthalenesulfonic acid salts, and fatty acid salts; nonionic surfactants such as polyoxyethylene alkylethers, polyoxyethylene alkylallylethers, acetylene glycols, and polyoxyethylene-polyoxypropylene block copolymers; and cationic surfactants such as alkylamine salts and quaternary ammonium salts. An organic fluorocompound may be used in place of such surfactants as described above. The organic fluorocompound is preferably hydrophobic. Examples of the organic fluorocompound include fluorochemical surfactants, oily fluorine compounds (e.g., fluorine oil) and solid fluorine compound resins (e.g., tetrafluoroethylene resin); and specific examples thereof include the organic fluorine compounds described in JP-B No. 57-9053 (Columns 8 to 17) and JP-ANo. 62-135826.

In addition, the ink composition according to the invention may further contain, as necessary, one or more substances selected from leveling additives, matting agents, waxes for the adjustment of film physical properties, and tackifiers for the improvement of the adhesiveness to the recording medium such as polyolefin or PET which tackifiers do not inhibit polymerization.

Specific examples of the tackifiers include the high-molecular-weight adhesive polymers described in JP-A 2001-49200, pp. 5 to 6 (e.g., copolymers of an ester of (meth)acrylic acid and an alcohol containing an alkyl group having from 1 to 20 carbons, copolymers of an ester of a (meth)acrylic acid and an alicyclic alcohol having from 3 to 14 carbons, and copolymers of an ester of (meth)acrylic acid and an aromatic alcohol having from 6 to 14 carbons), and low-molecular weight adhesive resin containing a polymerizable unsaturated bond.

### (Preferable physical properties of ink composition)

As described above, the ink composition to which the curable composition according to the invention is applied (ink composition according to the invention) contains a specific polymerizable compound, a compound that generates acid upon irradiation of radiation rays, and optionally, other additives such as other polymerizable compounds and colorants. The content of the colorant is preferably from 1 to 10 wt %, more preferably from 2 to 8 wt %, and the content of the total polymerizable compounds including the specific polymerizable compound is preferably from 1 to 97 wt %, more preferably, from 30 to 95 wt %, with respect to the total mass of the ink composition. The compound that generates acid upon irradiation of radiation rays is contained in an amount of preferably from 0.01 to 20 wt %, more preferably, from 0.1 to 20 wt %, with respect to the total polymerizable compounds including the specific polymerizable compound.

Considering the ejection efficiency when applied to inkjet recording, the ink composition according to the invention preferably has an ink viscosity of 7 to 30 mPa·s, more preferably 7 to 20 mPa·s, at the temperature at the time of ejection (e.g., from 40 to 80 °C, preferably from 25 to 30 °C). It is preferable to adjust and determine the proportions of the components in the composition adequately so that the viscosity falls in the range. The viscosity at room temperature (25 to 30°C) of the ink composition is preferably from 35 to 500 mPa·s, more preferably from 35 to 200 mPa·s. By increasing the viscosity at room temperature, it become possible to prevent penetration of the ink into the recording medium even when a porous recording medium is used, to reduce the amount of uncured monomer and the odor, to suppress bleeding upon the deposition of ink droplets, and consequently to improve the image quality.

The surface tension of the ink composition according to the invention is preferably from 20 to 30 mN/m and more preferably from 23 to 28 mN/m. When the ink is used for recording on various recording media such as polyolefin, PET, coated paper, and non-coated paper, the surface tension is preferably 20 mN/m or more in view of the bleeding and penetration, and 30 mN/m or less in view of the wettability.

The ink composition according to the invention is used advantageously as an inkjet recording ink. When used as inkjet recording ink, the ink composition according to the invention is ejected onto a recording medium by an inkjet printer, and the deposited ink composition is cured by irradiation with active radiation rays to complete recording.

The printed material obtained using the ink is superior in the strength of the image area which is cured by irradiation with active radiation rays such as ultraviolet rays, and thus can be used not only for image formation with the ink but also for various applications including the formation of an ink-receiving layer (image area) of a planographic printing plate.

### (Inkjet recording method)

The inkjet recording method to which the ink composition according to the invention can be applied favorably (inkjet recording method according to the invention) will be described below

The inkjet recording method according to the invention comprises ejecting a curable composition containing the components (a) and (b) described above onto a recording medium (such as a substrate or a recording material) with an inkjet recording apparatus, and curing the ejected composition by irradiation with active radiation rays. The cured composition forms an image on the recording medium.

The recording medium to which the inkjet recording method according to the invention is applicable is not particularly limited, and examples thereof include ordinary papers such as non-coated paper and coated paper, various non-absorptive resin materials for use in so-called soft packaging, and resin films thereof in the film shape. Examples of such various plastic films include PET film, OPS film, OPP film, ONy film, PVC film, PE film, and TAC film. Examples of other plastics usable as the material of the recording medium include polycarbonate, acrylic resins, ABS, polyacetal, PVA, and rubbers. In addition, metals and glasses are also usable as the recording media.

The thermal contraction of the ink composition according to the invention at curing is small, and the ink composition is excellent in adhesion to the base material (recording medium). Therefore, even when the recording medium is a film (such as a thermally shrinkable PET film, OPS film, OPP film, ONy film, or PVC film) that is curled or deformed easily, for example by the contraction of the ink at curing or by the heat generated at the curing, a high-definition image can be formed.

The support of a planographic printing plate to be described below is an example of the recording material that can be used in the invention.

In the inkjet recording method according to the invention, examples of the usable active radiation rays include α-rays, γ-rays, X-rays, ultraviolet rays, visible rays, infrared rays, and electron beams. The peak wavelength of the active radiation rays may be, for example, from 200 to 600 nm, preferably from 300 to 450 nm, and more preferably from 350 to 420 nm. Favorable output of the radiation rays is preferably 2,000 mJ/cm² or lower, more preferably from 10 to 2,000 mJ/cm², still more preferably from 20 to 1,000 mJ/cm², and further more preferably from 50 to 800 mJ/cm².

In particular, in the inkjet recording method according to the invention, the ink composition is preferably irradiated with a light-emitting diode which emits an ultraviolet rays having an emission wavelength peak of 350 to 420 nm and which gives a maximum illumination of 10 to 1,000 mW/cm² on the surface of the recording medium.

Other conditions applicable to the inkjet recording method according to the invention and details about the inkjet recording apparatus and others will be described below in description of the planographic printing plate according to the invention-a favorable application of the inkjet recording method according to the invention-and the method of preparing the same.

According to the inkjet recording method of the invention, it is possible to maintain the dot diameter of the deposited ink constant and to obtain an image with improved quality, on any of various substrates (recording media) different in surface wettability. In order to obtain a color image by the inkjet recording method according to the invention, it is preferable to form images in the order from a color lower in lightness. When color inks are deposited in that order, the irradiation rays reaches inks located at the bottom; therefore, superior curing sensitivity, reduction in the amount of residual monomer and odor, and improvement in adhesiveness are achieved. Although it is possible to conduct the irradiation with active rays after a full-color image is formed, it is preferable to irradiate the image after each color ink is deposited, in view of the acceleration of curing.

### (Planographic printing plate and method of producing planographic printing plate)

The method of producing a planographic printing plate according to the invention is a method of producing a planographic printing plate including (i) ejecting the ink composition according to the invention onto a substrate and (ii) forming a hydrophobic image of the cured ink composition on the substrate by irradiating the ejected ink composition with active radiation rays to cure the ink composition.

The planographic printing plate according to the invention is a planographic printing plate prepared according to the method of producing a planographic printing plate according to the invention, and has a support and a hydrophobic image formed on the support.

So-called PS plates having an oleophilic photosensitive resin layer formed on a hydrophilic support have been used commonly as planographic printing plates. The PS plates have been produced normally by mask exposure (surface exposure) through a lith film and subsequent removal of nonimage regions by solubilization. In recent years, digital technology, in which image information is processed, stored, and outputted electronically by computer, is becoming more and more popular, and there is a need for a newer image-output method compatible with the digital technology. In particular, under development is "computer-to-plate (CTP) technology" in which printing plates are produced directly by scanning with a highly directive rays such as laser beams according to digitalized image information without using a lith film.

In the invention, a method of preparing a planographic printing plate directly by using an ink composition or an inkjet recording ink composition may be used as the method of obtaining a planographic printing plate allowing such scanning exposure. In the method, a printing plate having a desired image (preferably a hydrophobic image) is formed by ejecting an ink onto a support (preferably a hydrophilic support) by the inkjet process or the like, and exposing the ejected ink composition or inkjet recording ink to active radiation rays. The ink composition or the inkjet recording ink according to the invention is suitable for such a process.

### (Ejecting ink composition onto support)

### (Support)

The support (recording medium) of the planographic printing plate according to the invention is not particularly limited, and may be a dimensionally stable plate-shaped support. The support is preferably hydrophilic. Examples of the materials for the support include paper, paper laminated with a plastic material (e.g., polyethylene, polypropylene, or polystyrene), metal plates (e.g., of aluminum, zinc, or copper), plastic films (e.g., cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinylacetal), paper or plastic films laminated with a metal selected from the above metals, paper or plastic films on which a metal selected from the above metals is deposited. Preferable examples of the support include polyester films and aluminum plates. Among them, aluminum plates, which are superior in dimensional stability and relatively cheap, are more preferable.

When the support is an aluminum plate, the aluminum plate may be a pure aluminum plate, an alloy plate containing aluminum as the main component and trace amounts of hetero-elements, or a thin film of aluminum or an aluminum alloy laminated with plastic. Examples of the hetero-element contained in the aluminum alloy include silicon, iron, manganese, copper, magnesium, chromium, zinc, bismuth, nickel, and titanium. The content of the hetero-elements in the alloy is preferably 10 wt % or less. Although pure aluminum plates are preferable in the invention, aluminum plates containing trace amounts of hetero-elements are also usable because it is difficult to prepare completely pure aluminum due to the problems in refining process. The composition of the aluminum plate is not particularly limited, and a known material may be used appropriately.

The thickness of the support is preferably from 0.1 to 0.6 mm and more preferably from 0.15 to 0.4 mm.

The aluminum plate is preferably subjected to a surface treatment such as a surface-roughening treatment or an anodizing treatment before use. The hydrophilicity of the support and the adhesion between the image-recording layer and the support are improved by the surface treatment. Before the surface-roughening treatment, the aluminum plate may be, as necessary, subjected to a degreasing treatment, for example, with a surfactant, organic solvent, aqueous alkaline solution, or the like so as to remove the rolling oil on the surface.

Various methods may be used for surface roughening of the aluminum plate, and examples thereof include a mechanical surface-roughening treatment, an electrochemical surface-roughening treatment (surface-roughening by dissolving the surface electrochemically), and a chemical surface-roughening treatment (surface-roughening by selectively dissolving the surface chemically).

The method for the mechanical surface-roughening may be selected from methods known in the art such as ball polishing, brush polishing, blast polishing, and buff polishing. A transfer method may also be used in which surface irregularity is imprinted by using a roll having the surface irregularity during hot rolling of aluminum.

The electrochemical surface roughening may be performed, for example, by applying an alternate or direct current to the support in an electrolyte solution containing an acid such as hydrochloric acid or nitric acid. A method of using a mixed acid is also usable, such as described in JP-A No. 54-63902.

The aluminum plate after surface-roughening treatment may be optionally etched with alkali, using an aqueous solution of potassium hydroxide, sodium hydroxide, or the like. After neutralization, the aluminum plate may be subjected, as necessary, to an anodizing process so as to improve the abrasion resistance.

The electrolyte to be used for the anodization of the aluminum plate may be selected from various electrolytes that are capable of forming a porous oxide film. In general, the electrolyte may be selected from sulfuric acid, hydrochloric acid, oxalic acid, chromic acid, or mixed acids thereof. The concentration of the electrolyte is determined adequately according to the kind of the electrolyte.

The condition of the anodization may be changed according to the electrolyte to be used, and thus cannot be specified uniquely. In general, the electrolyte concentration may be from 1 to 80 wt %; the liquid temperature may be from 5 to 70°C, the electric current density may be from 5 to 60 A/dm²; the voltage may be from 1 to 100 V; and the electrolysis time may be from 10 seconds to 5 minutes. The amount of the anodic oxide film to be formed is preferably from 1.0 to 5.0 g/m² and more preferably from 1.5 to 4.0 g/m². In this range, it is possible to obtain a planographic printing plate with superior printing durability and scratch resistance of the non-image area.

The support which has been subjected to a surface treatment such as described above and which has an anodic oxide film may be used, without further treatments, as the support to be used in the invention. However, the support may be further subjected to other treatments as necessary, such as a treatment for expanding or sealing the micropores in the anodic oxide film described in JP-A Nos. 2001-253181 and 2001-322365 and a treatment for imparting hydrophilicity to the support surface comprising immersing the support in an aqueous solution containing a hydrophilic compound, so as to further improve the adhesion of the support to the upper layer and the hydrophilicity, stain-resistance, heat insulation, and the like of the support. The expanding and sealing treatments are not limited to the methods described above, and may be any conventionally known methods.

### (Sealing treatment)

For example, the sealing treatment may be vapor sealing, a treatment only with fluorozirconic acid, a treatment with an aqueous solution containing an inorganic fluorine compound such as a treatment with sodium fluoride, vapor sealing involving addition of lithium chloride, or a treatment with hot water. The sealing treatment is preferably a sealing treatment with an aqueous solution containing an inorganic fluorine compound, a sealing treatment with water vapor, or a sealing treatment with hot water. Hereinafter, these methods are described respectively.

### (Sealing treatment with an aqueous solution containing an inorganic fluorine compound)

In a sealing treatment with an aqueous solution containing an inorganic fluorine compound, the inorganic fluorine compound to be used is preferably a metal fluoride.

Specific examples thereof include sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, potassium fluorotitanate, fluorozirconic acid, fluorotitanic acid, hexafluorosilicic acid, nickel fluoride, iron fluoride, fluorophosphoric acid and ammonium fluorophosphate. Preferable among these compounds are sodium fluorozirconate, sodium fluorotitanate, fluorozirconic acid and fluorotitanic acid.

The concentration of the inorganic fluorine compound in the aqueous solution is preferably 0.01 % by mass or higher, more preferably 0.05 % by mass or higher, in respect of sufficient sealing of micropores in the anodized film. The concentration of the inorganic fluorine compound in the aqueous solution is preferably 1 % by mass or lower, more preferably 0.5 % by mass or lower, in respect of stain resistance.

The aqueous solution containing an inorganic fluorine compound preferably further contains a phosphate compound. This is because, when the phosphate compound is contained in the aqueous solution, the hydrophilicity of the surface of the anodized film is improved thus improving on-press developability and stain resistance.

The phosphate compound is preferably selected from metal phosphates such as phosphates of alkali metals and phosphates of alkaline earth metals.

Specific examples thereof include zinc phosphate, aluminum phosphate, ammonium phosphate, diammonium hydrogen phosphate, ammonium dihydrogen phosphate, monoammonium phosphate, monopotassium phosphate, monosodium phosphate, potassium dihydrogen phosphate, dipotassium hydrogen phosphate, calcium phosphate, sodium ammonium hydrogen phosphate, magnesium hydrogen phosphate, magnesium phosphate, ferrous phosphate, ferric phosphate, sodium dihydrogen phosphate, sodium phosphate, disodium hydrogen phosphate, lead phosphate, diammonium phosphate, calcium dihydrogen phosphate, lithium phosphate, phosphotungstic acid, ammonium phosphotungstate, sodium phosphotungstate, ammonium phosphomolybdate, sodium phosphomolybdate, sodium phosphite, sodium tripolyphosphate and sodium pyrophosphate. Among these, sodium dihydrogen phosphate, disodium hydrogen phosphate, potassium dihydrogen phosphate and dipotassium hydrogen phosphate are preferable.

The combination of the inorganic fluorine compound and the phosphate compound is not particularly limited. In a preferable embodiment, the aqueous solution includes sodium fluorozirconate as the inorganic fluorine compound and sodium dihydrogen phosphate as the phosphate compound.

The concentration of the phosphate compound in the aqueous solution is preferably 0.01 % by mass or higher, more preferably 0.1 % by mass or higher, from the viewpoint of improving on-press developability and stain resistance. The concentration of the phosphate compound in the aqueous solution is preferably 20 % by mass or lower, more preferably 5 % by mass or lower, in respect of the solubility.

The ratios of the respective compounds in the aqueous solution are not particularly limited. The ratio by mass of the inorganic fluorine compound to the phosphate compound is preferably in the range of 1/200 to 10/1, more preferably in the range of 1/30 to 2/1.

The temperature of the aqueous solution is preferably 20°C or higher, more preferably 40°C or higher, but preferably 100°C or lower, more preferably 80°C or lower.

The pH of the aqueous solution is preferably 1 or higher, more preferably 2 or higher, but preferably 11 or lower, more preferably 5 or lower.

The method of sealing with the aqueous solution containing an inorganic fluorine compound is not particularly limited, and examples thereof include a dipping method and a spraying method. Only a single kind of sealing treatment may be conducted or two or more kinds of sealing treatments may be conducted in combination. Each kind of sealing treatment may be conducted only once, or may be conducted for twice or more.

The dipping method is preferable for conducting the sealing treatment. When the dipping method is used in the treatment, the treatment time is preferably at least 1 second, more preferably at least 3 seconds, but preferably 100 seconds or shorter, more preferably 20 seconds or shorter.

### (Sealing Treatment with Water Vapor)

The sealing treatment with water vapor may be conducted by, for example, allowing the anodized film to continuously or intermittently contact with pressurized water vapor or water vapor of atmospheric pressure.

The temperature of the water vapor is preferably 80°C or higher, more preferably 95°C or higher, but preferably 105°C or lower.

The pressure of the water vapor is preferably in the range of from (atmospheric pressure - 50 mmAq) to (atmospheric pressure + 300 mmAq). In an embodiment, the pressure of the water vapor is preferably in the range of 1.008×10⁵ to 1.043×10⁵ Pa.

The duration of the contact with water-vapor is preferably 1 second or longer, more preferably 3 seconds or longer, but preferably 100 seconds or shorter, more preferably 20 seconds or shorter.

### (Sealing Treatment with Hot Water)

The sealing treatment with hot water may be conducted, for example by dipping an aluminum plate having an anodized film formed thereon in hot water. The hot water may include an inorganic salt (for example, a phosphate) or an organic salt.

The temperature of the hot water is preferably 80°C or higher, more preferably 95°C or higher, but preferably 100°C or lower. The dipping time is preferably 1 second or longer, more preferably 3 seconds or longer, but preferably 100 seconds or shorter, more preferably 20 seconds or shorter.

The hydropilicity-imparting treatment optionally conducted in the invention may be an alkali metal silicate method described in US Patent Nos. 2,714,066, 3,181,461, 3,280,734 and 3,902,734. In this method, the support is dipped or electrolyzed in an aqueous solution of sodium silicate or the like. Other examples of the hydrophilicity-imparting treatment include a treatment with potassium fluorozirconate disclosed in JP-B 36-22063 and a treatment with polyvinyl phosphonic acid as disclosed in US Patent Nos. 3,276,868, 4,153,461, and 4,689,272.

The center line average roughness of the support is preferably from 0.10 to 1.2 µm. When the center line average roughness is in this range, there are advantages in that excellent adhesion to the image recording layer, excellent printing durability and excellent stain resistance can be obtained.

When ejecting the ink composition or the inkjet recording ink composition according to the invention onto the surface of a hydrophilic support, it is preferably to heat the ink composition or the inkjet recording ink composition to a temperature of preferably from 40 to 80°C, more preferably from 25 to 30°C so as to lower the viscosity of the ink composition to preferably from 7 to 30 m Pa.s, more preferably from 7 to 20 m Pa·s before ejection. In particular, use of an ink composition having an ink viscosity of 35 to 500 mP·s at 25°C is preferable since the above effects are significant. Use of this method provides high ejection stability.

In general, radiation-curable ink compositions, such as the ink composition according to the invention, are usually more viscous than aqueous inks that are used in common ink compositions or inkjet recording inks, and the fluctuation in the viscosity of radiation-curable ink compositions caused by the fluctuation in temperature during printing is larger. The fluctuation in the viscosity of ink composition exerts significant influences on the droplet size and the droplet ejection speed, causing deterioration in image quality, and thus, it is necessary to keep the temperature of the ink composition as constant as possible at the time of ejection. In the invention, it is preferable to control the ink composition temperature within ±5°C from the set temperature, more preferably ±2°C from the set temperature, and still more preferably ±1 °C from the set temperature.

### (Inkjet recording apparatus)

The inkjet recording apparatus for use in the invention is not particularly limited, and may be selected from commercially available inkjet recording apparatuses. That is, in the invention, images can be recorded on recording media by commercially available inkjet recording apparatuses.

An example of usable inkjet recording apparatuses contains an ink-supplying system, a temperature sensor, and a radiation ray source.

The ink-supplying system includes, for example, a stock tank storing the inkjet composition according to the invention, a supply pipe, an ink-supplying tank immediately before inkjet head, a filter, and a piezoelectric inkjet head. The piezoelectric inkjet head can be operated such that the ejection is conducted at a resolution of, for example, of 320×320 to 4,000×4,000 dpi, preferably, 400×400 to 1,600×1,600 dpi, and more preferably, 720×720 dpi to form multi-sized dots in an amount of 1 to 100 pl, preferably 8 to 30 pl. The unit "dpi" in the invention means the number of dots per 2.54 cm.

As described above, the temperature of a radiation-curable ink at the time of ejection is preferably maintained constant. Therefore, the region from the ink-supplying tank to the inkjet head may be thermally insulated and heated. The method of controlling the temperature is not particularly limited. In an embodiment, each piping unit is monitored by multiple temperature sensors and heated to control the temperature adequately based on the flow rate of ink and the environmental temperature. The temperature sensors may be disposed in the ink-supplying tank and near the nozzles of the inkjet head. In addition, the head unit to be heated is preferably thermally shielded or insulated so as to minimize the thermal influence on the apparatus from external air. It is preferable to insulate the head unit from other units and reduce the heat capacity of the entire unit to be heated in order to shorten the start-up time needed for heating or in order to reduce the loss in heat energy.

### (Forming a hydrophobic image of the cured ink composition on a support by curing the ejected ink composition by irradiation with active radiation rays)

The ink composition ejected onto the surface of a support is cured by irradiation of active radiation rays. If a sensitizing colorant is present together with a polymerization initiator (photoinitiator) in the ink composition at the time of curing, the sensitizing colorant in the system is activated into the excited state by absorption of the active radiation rays, and accelerates decomposition of the polymerization initiator upon contact with the polymerization initiator, and enables the curing reaction to have higher sensitivity.

Examples of the active radiation rays used for the curing include α-rays, γ-rays, electron beams, X-rays, ultraviolet rays, visible rays, and infrared rays. The peak wavelength of the active radiation rays may be changed depending on the absorption characteristics of the sensitizing dye, and may be, for example, from 200 to 600 nm, preferably from 300 to 450 nm, and more preferably from 350 to 420 nm. The polymerization-initiating system according to the invention is sufficiently sensitive to radiation rays even at a low output. Thus, the favorable output of the radiation rays may be, for example, an irradiation energy of 2,000 mJ/cm² or lower, preferably, from 10 to 2,000 mJ/cm², more preferably, from 20 to 1,000 mJ/cm², and still more preferably, from 50 to 800 mJ/cm² . The active radiation rays may be irradiated such that the illuminance on the exposure plane is, for example, from 10 to 2,000 mW/cm², and preferably from 20 to 1,000 mW/cm².

Mercury lamps, gas or solid state lasers and the like are widely used as active radiation ray sources, and mercury lamps and metal halide lamps are widely used for UV-curing inkjet. However, under the current strong needs for the elimination of the use of mercury from the viewpoint of environmental protection, it is very beneficial industrially and environmentally to replace mercury lamps with GaN-type semiconductor UV-emitting devices. In addition, LED's (UV-LED) and LD's (UV-LD) are smaller in size, longer in lifetime, higher in efficiency, and lower in cost, and thus, attracting attention as light sources for radiation-curing inkjet printers.

In the invention, a light-emitting diode (LED) or a laser diode (LD) may be used as the active radiation ray source. An ultraviolet LED or an ultraviolet LD may be used when an ultraviolet ray source is required. For example, a purple LED having a main emission spectrum in the wavelength range of 365 to 420 nm is available from Nichia Corporation. As to a light having a still shorter wavelength, U.S. Patent No. 6,084,250 discloses an LED capable of emitting active radiation having a center emission spectrum in the wavelength region of 300 to 370 nm. Other ultraviolet LED's are also commercially available, and capable of emitting radiations of different UV ranges. The radiation ray source used in the invention is preferably a UV-LED, and particularly preferably a UV-LED having a peak wavelength in the range of 350 to 420 nm.

In addition, the maximum illuminance of LED on the recording medium is preferably from 10 to 2,000 mW/cm², more preferably from 20 to 1,000 mW/cm², and particularly preferably from 50 to 800 mW/cm².

In the invention, the ink composition may be irradiated with such active radiation rays, for example, for 0.01 to 120 seconds, preferably 0.1 to 90 seconds.

As to the irradiation condition and the basic irradiation method of the active radiation rays, those disclosed in JP-A No. 60-132767 can be applied. Specifically, the exposure is performed in a so-called shuttle process, i.e., by moving a head unit and light sources that are placed at both sides of the head unit in the ink-ejecting device. The active radiation rays are irradiated after a certain period (e.g., from 0.01 to 0.5 second, preferably from 0.01 to 0.3 second, and more preferably, from 0.01 to 0.15 second) from ink deposition. It becomes possible to prevent bleeding of the deposited ink on the recording medium before curing, by shortening the period between the deposition of the ink and the irradiation of active radiation rays to such an extremely short period. Further, since the ink is irradiated before penetrating to a deep portion in the recording medium where the light does not reach even when the recording medium is porous, the ink composition is surely irradiated, whereby the amount of the remaining unreacted monomer is reduced and consequently the odor is also reduced.

In an embodiment, the ink composition is cured using another light source that is not driven. Specifically, WO 99/54415 pamphlet discloses an irradiation method comprising using an optical fiber and an irradiation method comprising irradiating the recording area with UV rays by directing a collimated rays to a mirror surface on the sidewall of head unit. These irradiation methods may be used in the invention.

Thus according to the method of producing a planographic printing plate according to the invention, it is possible to form a hydrophobic image on the surface of a support by using the ink composition according to the invention and curing the ink composition by irradiation of active radiation rays.

### EXAMPLES

Hereinafter, the present invention will be described more in detail, with reference to Examples and Comparative Examples. However, the invention is not restricted by these Examples.

### [Reference Example 1: Image formation by cationic polymerization]

### (Preparation of ink)

### <Yellow ink 1>

- C.I. Pigment Yellow 13 5 parts by weight
- Photocationic polymerization initiator: triphenylsulfonium salt
   (UVI-6992, manufactured by Dow Chemical Company) 6 parts by weight
- Sensitizing colorant: 9,10-dibutoxyanthracene 3 parts by weight
- Polymerizable compounds
   Monomer: 3,4-epoxycyclohexylmethyl-3',4'-epoxycyclohexanecarboxylate (CELOXIDE 2021A, manufactured by Daicel UCB) 35 parts by weight
   Monomer: 3,7-bis(3-oxetanyl)-5-oxanonane
      (OXT-221, manufactured by Toagosei Co., Ltd.) 40 parts by weight
   Monomer: following compound (a-1) 11 parts by weight

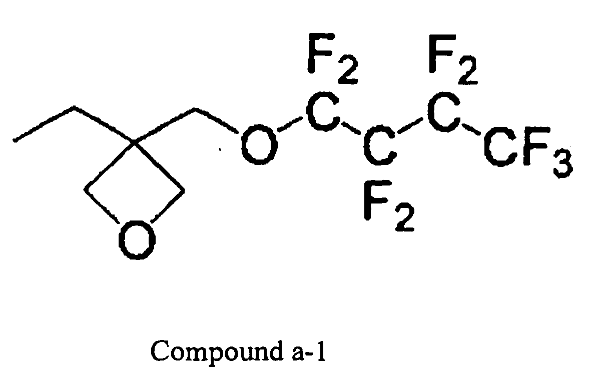

### <Magenta ink 1>

- C.I. Pigment Red 57:1 5 parts by weight
- Photocationic polymerization initiator: triphenylsulfonium salt
   (UVI-6992, manufactured by Dow Chemical Company) 6 parts by weight
- Sensitizing colorant: 9,10-dibutoxyanthracene 3 parts by weight
- Polymerizable compounds
   Monomer: 3,4-epoxycyclohexylmethyl-3',4'-epoxycyclohexanecarboxylate (CELOXIDE 2021A, manufactured by Daicel UCB) 35 parts by weight
   Monomer: 3,7-bis(3-oxetanyl)-5-oxanonane
      (OXT-221, manufactured by Toagosei Co., Ltd.) 40 parts by weight
   Monomer: the compound (a-1) above 11 parts by weight

### <Cyan ink 1>

- C.I. Pigment blue 15:3 5 parts by weight
- Photocationic polymerization initiator: triphenylsulfonium salt
   (UVI-6992, manufactured by Dow Chemical Company) 6 parts by weight
- Sensitizing colorant: 9,10-dibutoxyanthracene 3 parts by weight
- Polymerizable compounds
   Monomer: 3,4-epoxycyclohexylmethyl-3',4'-epoxycyclohexanecarboxylate (CELOXIDE 2021A, manufactured by Daicel UCB) 35 parts by weight
   Monomer: 3,7-bis(3-oxetanyl)-5-oxanonane
      (OXT-221, manufactured by Toagosei Co., Ltd.) 40 parts by weight
   Monomer: the compound (a-1) above 11 parts by weight

### <Black ink 1>

- C.I. Pigment black 7 5 parts by weight
- Photocationic polymerization initiator: triphenylsulfonium salt
   (UVI-6992, manufactured by Dow Chemical Company) 6 parts by weight
- Sensitizing colorant: 9,10-dibutoxyanthracene 3 parts by weight
- Polymerizable compounds
   Monomer: 3,4-epoxycyclohexylmethyl-3',4'-epoxycyclohexanecarboxylate (Celoxide 2021A, manufactured by Daicel UCB) 35 parts by weight
   Monomer: 3,7-bis(3-oxetanyl)-5-oxanonane
      (OXT-221, manufactured by Toagosei Co., Ltd.) 40 parts by weight
   Monomer: compound (a-1) above 11 parts by weight

The crude inks in various colors thus prepared were filtered though a filter having an absolute filtration accuracy of 2 µm, to give inks 1 in various colors.

### [Reference Example 2: Image formation by cationic polymerization]

### <Magenta ink 2>

A magenta ink 2 was prepared in the same manner as the preparation of the magenta ink 1, except that 11 parts by weight of the compound (a-1), which was one of the monomers used as the polymerizable compounds in the magenta ink 1 prepared in Reference Example 1, was replaced with 11 parts by weight of the following compound (a-2).

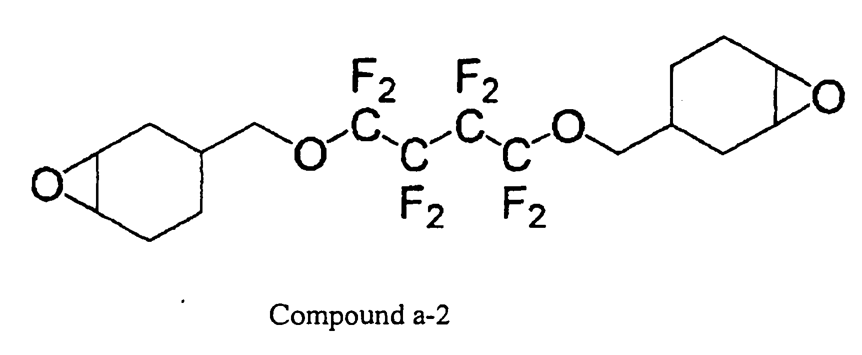

### [Reference Example 3: Image formation by cationic polymerization]

### <Magenta ink 3>

A magenta ink 3 was prepared in the same manner as the preparation of the magenta ink 1, except that the compound (a-1), which is one of the monomers used as the polymerizable compounds in the magenta ink 1 prepared in Reference Example 1, was replaced with the following compound (a-3).

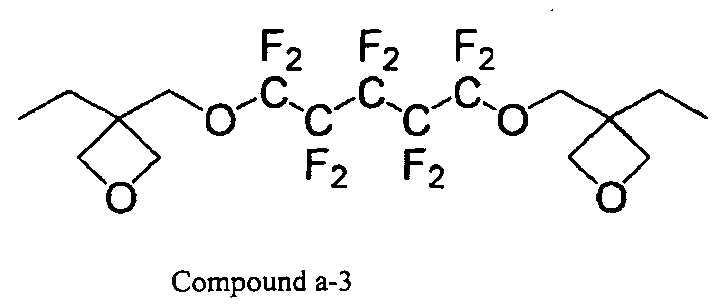

### [Reference Example 4: Image formation by cationic polymerization]

### <Magenta ink 4>

A magenta ink 4 was prepared in the same manner as the preparation of the magenta ink 1, except that 11 parts by weight of the compound (a-1), which is one of the monomers used as the polymerizable compounds in the magenta ink 1 prepared in Reference Example 1, was replaced with 11 parts by weight of the following compound (a-4).

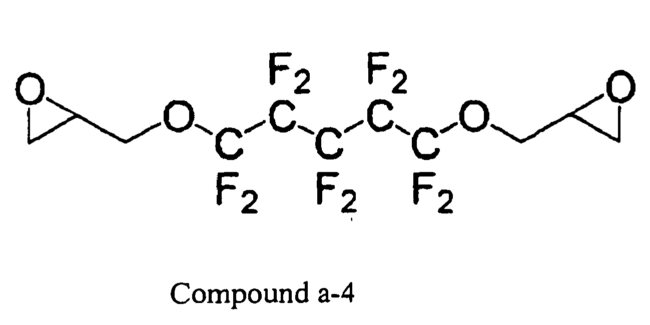

### <Magenta ink 5>

A magenta ink 5 was prepared in the same manner as the preparation of the magenta ink 1, except that the 11 parts by weight of the compound (a-1), which is one of the monomers used as the polymerizable compounds in Reference Example 1, was replaced with the 11 parts by weight of the following compound (a-5).

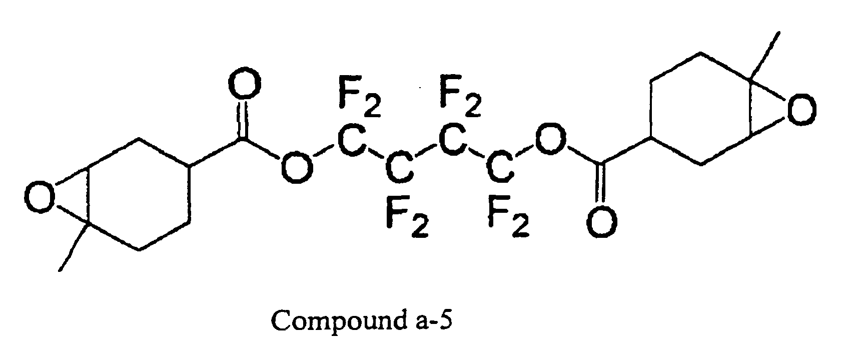

### [Reference Example 6: Image formation by cationic polymerization]

### <Magenta ink 6>

A magenta ink 6 was prepared in the same manner as the preparation of the magenta ink 1, except that 3 parts by weight of the 9,10-dibutoxyanthracene used as the sensitizing colorant in the magenta ink prepared in Reference Example 1 was replaced with 3 parts by weight of "DAROCUR ITX (manufactured by Ciba Specialty Chemicals)".

### [Reference Example 7: Image formation by cationic polymerization]

### <Magenta ink 7>

A magenta ink 7 was prepared in the same manner as the preparation of the magenta ink 1, except that 5 parts by weight of "C.I. Pigment Red 57:1" used for the magenta ink 1 prepared in Reference Example 1 was replaced with 5 parts by weight of the following "oil soluble dyes M-1 (oxidation potential: +1,37 V).

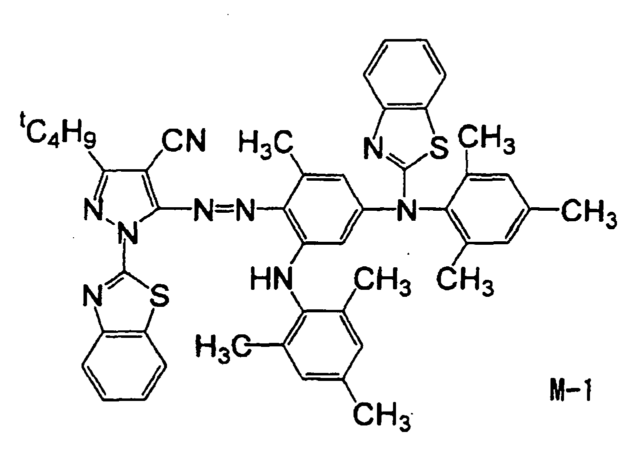

### [Reference Example 8: Image formation by cationic polymerization]

### <Magenta ink 8>

A magenta ink 8 was prepared in the same manner as the preparation of the magenta ink 1, except that 5 parts by weight of "C.I. Pigment Red 57:1" used for the magenta ink 1 prepared in Reference Example 1 was replaced with 5 parts by weight of the following "oil soluble dyes M-2 (oxidation potential: +0.94 V)".

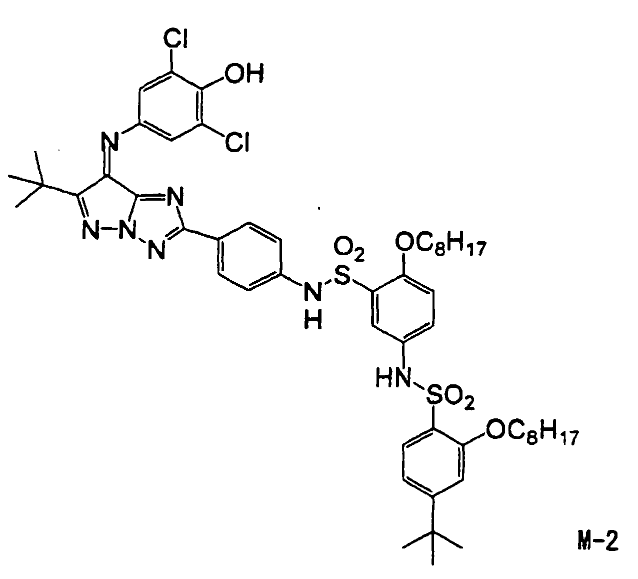

### [Comparative Example 1: Image formation by cationic polymerization]

### <Magenta ink 9>

A magenta ink 9 was prepared in the same manner as the preparation of the magenta ink 1, except that 40 parts by weight of 3,7-bis(3-oxetanyl)-5-oxanonane (OXT-221:
manufactured by Toagosei Co., Ltd.) and 11 parts by weight of the compound (a-1), which are included in the monomers used as the polymerizable compounds in the magenta ink 1 prepared in Reference Example 1, were replaced with 51 parts by weight of 3,7-bis(3-oxetanyl)-5-oxanonane (OXT-221, manufactured by Toagosei Co., Ltd.).

### [Comparative Example 2: Image formation by cationic polymerization]

### <Magenta ink 10>

A magenta ink 10 was prepared in the same manner as the magenta ink 1, except that 11 parts by weight of the compound (a-1), which is one of the monomers uses as polymerizable compounds in magenta ink 1 prepared in Reference Example 1, was replaced with 11 parts by weight of the following comparative compound.

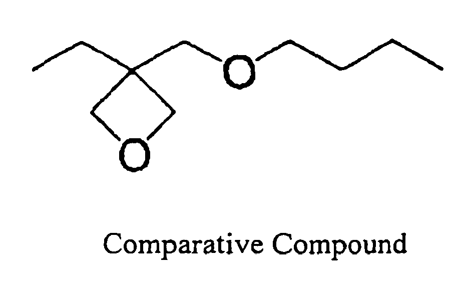

The crude magenta inks 2 to 10 prepared in Reference Examples 2 to 8 and Comparative Examples 1 and 2 above were each filtered through a filter having an absolute filtration accuracy of 2 µm, to give magenta inks 2 to 10.

The viscosity of each of the ink compositions prepared in the Reference Examples and Comparative Examples above was in the range of 7 to 35 mPa·s at the ink ejection temperature.

### [Example 1: Combined used with radical monomer]

### (Cyan-colored ink composition)

- Light acrylate L-A 15.4 parts
   (* acrylate monomer, manufactured by Kyoeisha Chemical)
- ACTILANE 421 (* acrylate monomer, manufactured by Akcros) 26.0 parts
   Monomer: compound (a-2) 10 parts
- PHOTOMER 2017 (UV diluent, manufactured by EChem) 20.0 parts
- SOLSPERSE 32000 (dispersant, manufactured by Noveon) 0.4 part
- Irgalite Blue GLVO [] 3.6 parts
   (pigment, manufactured by Ciba Specialty Chemicals)
- GENORAD 16 (stabilizer, manufactured by Rahn) 0.05 part
- RAPI-CURE DVE-3 (vinyl ether, manufactured by ISP Europe) 8.0 part
- LUCIRIN TPO (photoinitiator, manufactured by BASF) 8.5 parts
- Benzophenone (photoinitiator) 4.0 parts
- IRGACURE 184 4.0 parts
   (photoinitiator, manufactured by Ciba Specialty Chemicals)
- Byk 307 (antifoam, manufactured by BYK Chemie) 0.05 part
   * ACTILANE 421: propoxylated neopentylglycol diacrylate (bifunctional acrylate).
   Light acrylate L-A: lauryl acrylate ester (monofunctional acrylate).

### [Example 2]

The following components were agitated in a high speed water-cooled stirrer, to give a magenta-colored UV inkjet ink.

### (Magenta-colored ink composition)

- Light acrylate L-A 13.4 parts
- ACTILANE 421 28.0 parts
   (acrylate monomer, manufactured by Akcros)
- Monomer: compound (a-2) 10 parts
- PHOTOMER 2017 (UV diluent, manufactured by EChem) 20.0 parts
- SOLSPERSE 32000 (dispersant, manufactured by Noveon) 0.4 part
- CINQUASIA MAZENTA RT-355D 3.6 parts
   (pigment, manufactured by Ciba Specialty Chemicals)
- GENORAD 16 (stabilizer, manufactured by Rahn) 0.05 part
- RAPI-CURE DVE-3 (vinyl ether manufactured by ISP Europe) 8.0 parts
- LUCIRIN TPO (photoinitiator, manufactured by BASF) 8.5 parts
- Benzophenone (photoinitiator) 4.0 parts
- IRGACURE 184 4.0 parts
   (photoinitiator, manufactured by Ciba Specialty Chemicals)
- Byk 307 (antifoam, manufactured by BYK Chemie) 0.05 part

### [Example 3]

The following components were agitated in a high speed water-cooled stirrer, to give a yellow-colored UV inkjet ink.

### (Yellow-colored ink composition)

- Light acrylate L-A 17.4 parts
- ACTILANE 421 28.0 parts
   (acrylate monomer, manufactured by the Akcros)
- Monomer: compound (a-2) 10 parts
- PHOTOMER 2017 (UV diluent, manufactured by EChem) 20.0 parts
- SOLSPERSE 32000 (dispersant, manufactured by Noveon) 0.4 part
- CROMOPHTAL YELLOW LA (pigment, manufactured by Ciba Specialty Chemicals) 3.6 parts
- GENORAD 16 (stabilizer, manufactured by Rahn) 0.05 part
- RAPI-CURE DVE-3 (vinyl ether manufactured by ISP Europe) 4.0 parts
- LUCIRIN TPO (photoinitiator, manufactured by BASF) 8.5 parts
- Benzophenone (photoinitiator) 4.0 parts
- IRGACURE 184 4.0 parts
   (photoinitiator, manufactured by Ciba Specialty Chemicals)
- Byk 307 (antifoam, BYK Chemie) 0.05 part

### [Example 4]

The following components were agitated in a high speed water-cooled stirrer, to give a black UV inkjet ink.

### (Black ink composition)

- Light acrylate L-A 17.4 parts
- ACTILANE 421 28.0 parts
   (acrylate monomer, manufactured by the Akcros)
- Monomer: compound (a-2) 10 parts
- PHOTOMER 2017 (UV diluent, manufactured by EChem) 20.0 parts
- SOLSPERSE 32000 (dispersant, manufactured by Noveon) 0.4 part
- MICROLITH BLACK CK 2.6 parts
   (pigment, manufactured by Ciba Specialty Chemicals)
- GENORAD 16 (stabilizer, manufactured by Rahn) 0.05 part
- RAPI-CURE DVE-3 (vinylether, manufactured by ISP Europe) 5.0 parts
- LUCIRIN TPO (photoinitiator, manufactured by BASF) 8.5 parts
- Benzophenone (photoinitiator) 4.0 parts
- IRGACURE 184 4.0 parts
   (photoinitiator, manufactured by Ciba Specialty Chemicals)
- Byk 307 (antifoam, manufactured by BYK Chemie) 0.05 part

### [Example 5]

The following components were agitated in a high speed water-cooled stirrer, to give a cyan-colored UV inkjet ink.

### (Cyan-colored ink composition)

- Light acrylate L-A 25.4 parts
   (* acrylate monomer, manufactured by Kyoeisha Chemical)
- ACTILANE 422 38.0 parts
(* acrylate monomer, manufacture by Akcros)
- Monomer: compound (a-3) 10 parts
- SOLSPERSE 32000 (dispersant, manufactured by Noveon) 0.4 part
- IRGALITE BLUE GLVO 3.6 parts
   (pigment, manufactured by Ciba Specialty Chemicals)
- GENORAD 16 (stabilizer, manufactured by Rahn) 0.05 part
- RAPI-CURE DVE-2 (vinyl ether, manufactured by ISP Europe) (component (C)) 6.0 parts
- LUCIRIN TPO (photoinitiator, manufactured by BASF) 8.5 parts
- Benzophenone (photoinitiator) 4.0 parts
- IRGACURE 184 4.0 parts
   (photoinitiator, manufactured by Ciba Specialty Chemicals)
- Byk 307 (antifoam, manufactured by BYK Chemie) 0.05 part
   * Actilane422: dipropylene glycol diacrylate (bifunctional acrylate).

### [Example 6]

The following components were agitated in a high speed water-cooled stirrer, to give a cyan-colored UV inkjet ink.

### (Cyan-colored ink composition)

- Light acrylate L-A 25.0 parts
   (* acrylate monomer, manufactured by Kyoeisha Chemical)
- KAYARAD HDDA 2.6 parts
   (* acrylate monomer, manufactured by Nippon Kayaku)
- ACTILANE 421 41.0 parts
   (acrylate monomer, manufactured by the Akcros)
   Monomer: compound (a-4) 10 parts
- SOLSPERSE 32000 (dispersant, manufactured by Noveon) 0.4 part
- SOLSPERSE 5000 (dispersant, manufactured by Noveon) 0.05 part
- IRGALITE BLUE GLVO (pigment, manufactured by Ciba Specialty Chemicals) 1.4 parts
- GENORAD 16 (stabilizer, manufactured by Rahn) 0.05 part
- RAPI-CURE DVE-3 (vinyl ether, manufactured by ISP Europe) 5.0 parts
- LUCIRIN TPO (photoinitiator, manufactured by BASF) 8.0 parts
- Benzophenone (photoinitiator) 2.0 parts
- IRGACURE 184 4.0 parts
   (photoinitiator: component (A), manufactured by Ciba Specialty Chemicals)
- Byk 307 (antifoam, manufactured by BYK Chemie) 0.5 part
   * KAYARAD HDDA: 1,6-hexanediol diacrylate (bifunctional acrylate).
   * Light acrylate L-A: lauryl acrylate ester (monofunctional acrylate)

### [Comparative Example 3]

The following components were agitated in a high speed water-cooled stirrer, to give a cyan-colored UV inkjet ink.

### (Cyan-colored ink composition)

- Light acrylate L-A 25.4 parts
   (* acrylate monomer, manufactured by Kyoeisha Chemical)
- ACTILANE 421 26.0 parts
   (acrylate monomer, manufactured by the Akcros)
- PHOTOMER 2017 (UC diluent, manufactured by EChem) 20.0 parts
- SOLSPERSE 32000 (dispersant, manufactured by Noveon) 0.4 part
- IRGALITE BLUE GLVO 3.6 parts
   (pigment, manufactured by Ciba Specialty Chemicals)
- GENORAD 16 (stabilizer, manufactured by Rahn) 0.05 part
- RAPI-CURE DVE-3 (vinyl ether, manufactured by ISP Europe) (component (C))
   8.0 parts
- LUCIRIN TPO (photoinitiator, manufactured by BASF) 8.5 parts
- Benzophenone 4.0 parts
- IRGACURE 184 4.0 parts
   (photoinitiator, manufactured by Ciba Specialty Chemicals)
- Byk 307 (antifoam, manufactured by BYK Chemie) 0.05 part
   * Light acrylate L-A: lauryl acrylate ester (monofunctional acrylate)

### [Comparative Example 4]

### (Cyan-colored ink composition)

- Light acrylate L-A 15.4 parts
   (* acrylate monomer, manufactured by Kyoeisha Chemical)
- ACTILANE 421 (* acrylate monomer, manufactured by Akcros) 26.0 parts
- Monomer: the comparative compound above 10 parts
- PHOTOMER 2017 (UV diluent, manufactured by EChem) 20.0 parts
- SOLSPERSE 32000 (dispersant, manufactured by Noveon) 0.4 part
- IRGALITE BLUE GLVO 3.6 parts
   (pigment, manufactured by Ciba Specialty Chemicals)
- GENORAD 16 (stabilizer, manufactured by Rahn) 0.05 part
- RAPI-CURE DVE-3 (vinyl ether, manufactured by ISP Europe) 8.0 parts
- LUCIRIN TPO (photoinitiator, manufactured by BASF) 8.5 parts
- Benzophenone (photoinitiator) 4.0 parts
- IRGACURE 184 4.0 parts
   (photoinitiator, manufactured by Ciba Specialty Chemicals)
- Byk 307 (antifoam, manufactured by BYK Chemie) 0.05 part
   * Actilane 421: propoxylated neopentylglycol diacrylate (bifunctional acrylate)
   * Light acrylate L-A: lauryl acrylate ester (monofunctional acrylate)

The crude inks 1 to 14 prepared in Reference Examples 1 to 8, Examples 1-6 and Comparative Examples 1 to 4 above were each filtered through a filter having an absolute filtration accuracy of 2 µm, to give inks 1 to 14.
The viscosity of each of the ink compositions prepared in the Examples and Comparative Examples above was in the range of 5 to 35 mPa·s at the ink ejection temperature.

### (Ink evaluation)

Each of the ink compositions obtained was printed on a polyvinyl chloride sheet, and the sheet was irradiated by being conveyed under the light from an iron-doped ultraviolet lamp (power: 120 W/cm) at a speed of 40 m/min, so that the ink composition was cured to give a printed material.

The following evaluation tests were conducted concerning the printing.

The exposure energy during curing was determined by using a light-intensity integrating meter (UV Power MAP, manufactured by EIT).

The curability was evaluated by sensory testing (touching) of the ink image area on the printed material after curing. The adhesiveness to the recording medium was evaluated according to a crosshatch test (EN ISO2409) into five ranks 5B to 1B according to ASTM; a rank closer to 5B is better, and a rank of 3B or higher indicates a level that is practically non-problematic.

**[Table 1]**

| | Integrated exposure quantity (mJ/cm²) | Curing efficiency | Adhesiveness (crosshatch test) | Bending test |
|---|---|---|---|---|
| Reference Example 1 | 330 | Satisfactory | 4B | 4 |
| Reference Example 2 | 330 | Satisfactory | 3B | 4 |
| Reference Example 3 | 330 | Satisfactory | 3B | 4 |
| Reference Example 4 | 330 | Satisfactory | 3B | 4 |
| Reference Example 5 | 330 | Satisfactory | 3B | 3 |
| Reference Example 6 | 330 | Satisfactory | 3B | 3 |
| Reference Example 7 | 330 | Satisfactory | 3B | 4 |
| Reference Example 8 | 330 | Satisfactory | 3B | 3 |
| Example 1 | 330 | Satisfactory | 4B | 4 |
| Example 2 | 330 | Satisfactory | 4B | 4 |
| Example 3 | 330 | Satisfactory | 4B | 4 |
| Example 4 | 330 | Satisfactory | 4B | 4 |
| Example 5 | 330 | Satisfactory | 4B | 4 |
| Example 6 | 330 | Satisfactory | 4B | 4 |
| Comparative Example 1 | 330 | Inferior | 2B | 2 |
| Comparative Example 2 | 330 | Inferior | 2B | 2 |
| Comparative Example 3 | 330 | Inferior | 1B | 1 |
| Comparative Example 4 | 330 | Inferior | 1B | 2 |

### [Reference Example 9 and Example 7]

### (Preparation of support)

Molten metal was prepared from an aluminum alloy whose composition was:
Si: 0.06 mass %,
Fe: 0.30 mass %,
Cu: 0.025 mass %,
Mn: 0.001 mass %,
Mg: 0.001 mass %,
Zn: 0.001 mass %,
Ti: 0.03 mass %,

### A1 and and unavoidable impurities: remainder.

The molten aluminum was subjected to a molten metal treatment, and was filtered and molded into ingots having a thickness of 500 mm and a width of 1,200 mm by DC casting. The surface of the ingot was subjected to facing to an average depth of 10 mm by a surface grinder, and the ingot was heated consistently at 550°C for approximately 5 hours, and hot-rolled into a rolled plate having a thickness of 2.7 mm with a hot rolling mill after it is cooled to a temperature of 400°C. The plate was heat-treated additionally at 500°C in a continuous annealing machine, and cold-rolled into a JIS1050 aluminum plate having a thickness of 0.24 mm. The average width and the average length of the crystal grains of the aluminum obtained were respectively 50 µm and 300 µm. After the width of the aluminum plate was set to 1,030 mm, it was subjected to the following surface treatment to give an aluminum support.

### <Surface treatment>

The following various treatments (a) to (j) were performed continuously. The processing solution remaining on the aluminum plate was removed by nip roller after each treatment or washing with water.

### (a) Mechanical surface roughening treatment

While a suspension containing a polishing agent (pumice) with a specific gravity of 1.12 and water was supplied as a polishing slurry onto the surface of the aluminum plate, mechanical surface roughening was carried out by rotating roller-type nylon brushes. The average particle size of the polishing agent was 30 µm and the maximum particle size was 100 µm. The material of the nylon brushes was 6-10 nylon and hair length and hair diameters were 45 mm and 0.3 mm, respectively. The nylon brushes were produced by implanting the hairs densely in holes formed in a stainless cylinder with a diameter of φ300 mm. Three such rotating brushes were used. Two supporting rollers (φ200 mm diameter) were placed in lower parts of the brushes with a separation distance of 300 mm between the supporting rollers. The brush rollers were pushed such that the load of the driving motor for rotating the brushes was increased by 7 kW from the load before the brush rollers were pushed against the aluminum plate. The rotation direction of the brushes was the same as the moving direction of the aluminum plate. The rotation speed of the brushes was 200 rpm.

### (b) Alkaline etching treatment

Etching treatment was carried out by spraying an aqueous NaOH solution having a temperature of 70°C (NaOH concentration being 2.6% by weight and also containing 6.5% by weight of aluminum ion) onto the aluminum plate, to dissolve the aluminum plate by an amount of 10 g/m². After that, the aluminum plate was washed with sprayed water.

### (c) Desmutting treatment

The aluminum plate was subjected to a desmutting treatment by spraying an aqueous solution containing 1 wt % of nitric acid (additionally containing 0.5 wt % of aluminum ion) and having a temperature of 30°C, and then washed with sprayed water. The aqueous nitric acid solution used for desmutting was the waste water obtained in the electrochemical surface-roughening in an aqueous nitric acid solution with an alternating electrical current.

### (d) Electrochemical surface-roughening treatment

The aluminum plate was further subjected to a continuous electrical surface roughening with a 60-Hz alternating current. The electrolyte used was an aqueous solution containing 10.5 g/L of nitric acid (containing additionally 5 g/L of aluminum ion and 0.007 % by weight of ammonium ion) having a temperature of 50°C. The electrochemical surface roughening was performed using a trapezoidal alternating current having a trapezoidal waveform with a transition period from zero to peak currency of 0.8 msec and a duty ratio of 1:1 using a carbon electrode as the counter electrode. Ferrite was used as the auxiliary anode.

The electric current density was 30 A/dm² at peak value, and the total quantity of electricity applied was 220 C/dm² at the time the aluminum plate served as the anode. 5% of the current from the power source was divided and sent to the auxiliary electrode. Subsequently, the aluminum plate was washed with sprayed water.

### (e) Alkaline etching treatment

The aluminum plate was etched by being sprayed with an aqueous solution containing 26 wt % of caustic soda and 6.5 wt % of aluminum ion at 32°C to melt 0.50 g/m² of the aluminum plate, thereby removing the smut component mainly containing aluminum hydroxide generated during the previous electrochemical surface-roughening treatment with an alternating electrical current, and smoothing the edge portion through dissolution of the edge portions of the pits generated. Subsequently, the aluminum plate was washed with sprayed water.

### (f) Desmutting treatment

The aluminum plate was desmutted by spraying an aqueous solution containing 15 wt % of nitric acid (containing additionally 4.5 wt % of aluminum ion) having a temperature of 30°C, and then washed with sprayed water. The wastewater obtained in the electrochemical surface-roughening of the aluminum plate in an aqueous nitric acid solution with an alternating electrical current, was used as the aqueous nitric acid solution for desmutting.

### (g) Electrochemical surface roughening treatment

Electrochemical surface roughening treatment was carried out continuously by using 60 Hz AC voltage. The electrolytic solution used was an aqueous solution of hydrochloric acid (the concentration thereof being 5.0 g/L and also containing 5 g/L of aluminum ion) having a temperature of 35°C. The AC power waveform had a trapezoidal rectangular waveform with a transition period from zero to peak currency of 0.8 msec and a duty ratio of 1:1 and a carbon electrode was used as the counter electrode, to effect the electrochemical surface roughening treatment. Ferrite was used as an auxiliary anode. A radial cell type electrolytic bath was used for the electrochemical surface roughening.

The current density was 25 A/dm² at the peak value of the current and the total electricity quantity was 50 C/dm² at the time the aluminum plate served as the anode. Thereafter, the aluminum plate was washed with sprayed water.

### (h) Alkali etching treatment

Etching treatment was carried out at 32°C on the aluminum plate by spraying an aqueous solution containing 26 wt. % of sodium hydroxide and 6.5 wt. % of aluminum ion onto the aluminum plate, to dissolve 0.12 g/m² of the aluminum plate, thereby removing the smut component mainly composed of aluminum hydroxide produced during the previous electrochemical roughening treatment with an alternating current, and smoothing the edges through the dissolution of the edge portions of the generated pits. Thereafter, the aluminum plate was washed with sprayed water.

### (i) Desmutting treatment

A desmutting treatment was carried out by spraying an aqueous solution containing 25% by weight of sulfuric acid and 0.5% by weight of aluminum ion having a temperature of 60°C. Then, the aluminum plate was washed with sprayed water.

### (j) Anodization treatment

The aluminum plate was anodized in an anodic oxidation apparatus (the length of each of the first and second electrolysis units: 6 m, the length of each of the first and second power supply units: 3 m). The electrolyte solution supplied to the first and second electrolysis units was sulfuric acid. The electrolyte solution was an aqueous 50 g/L sulfuric acid solution (also containing aluminum ion at 0.5 mass %) at a temperature of 20°C. The aluminum plate was then washed with sprayed water. The final amount of the oxide layer thus prepared was 2.7 g/m².

### (Preparation and evaluation of planographic printing plate)

An image was formed and cured on the aluminum support prepared above with each of the ink compositions obtained in Reference Example 1 and Example 1, in a similar manner to Reference Example 1 (in the case of Reference Example 9) or Example 1 (in the case of Example 7). The image thus obtained was evaluated by using the product as a planographic printing plate.

### (1) Evaluation of inkjet image

Printing was performed by using each of the planographic printing plates prepared with the ink compositions of Reference Example 1 and Example 1 in a Heidel KOR-D printing machine, while supplying ink (VALUES-G red for sheet-fed printing press manufactured by Dainippon Ink and Chemicals, Inc.] and dampening water (ECOLITY 2 manufactured by Fuji Photo Film). The printed matter after printing on 100 sheets was evaluated visually, and it was confirmed that the planographic printing plates gave an image having no whitening in the image region and no stains in the non-image region.

### (2) Evaluation of printing durability

Continued printing with the planographic printing plates gave 10,000 or more prints carrying a high-quality image having no whitening in the image region and no stains in the nonimage region, indicating that the plates has printing durability at practically non-problematic level.

These results show that the planographic printing plates prepared by using the ink compositions according to the invention has superior printing durability and is capable of forming a high-quality image without staining in the nonimage portion.

The invention provides an ink composition that is cured by irradiation of radiation rays with high sensitivity and gives a strong and flexible image that is superior in adhesiveness to the recording medium, and an inkjet recording method using the ink composition.

The invention also provides a printed material and a planographic printing plate obtained by using the ink composition that can be cured with high sensitive by irradiation of radiation rays, and a method of producing the planographic printing plate.

All publications, patent applications, and technical standards mentioned in this specification are herein incorporated by reference to the same extent as if each individual publication, patent application, or technical standard was specifically and individually indicated to be incorporated by reference.

## Claims

1. An ink composition comprising a polymerizable compound having a partial structure that contains a cyclic ether and at least one fluorine atom, a polymerization initiator, a colorant and a radical-polymerizable compound;
wherein the ratio of the weight of the polymerizable compound having a partial structure that contains a cyclic ether and at least one fluorine atom to the weight of the radical-polymerizable compound is in the range of 1:3 to 1:10.

2. An ink composition according to Claim 1, wherein the cyclic ether has from 3 to 9 carbon atoms.

3. An ink composition according to Claim 1, wherein the cyclic ether is represented by any one of the following formulae (1-A) to (1-C):

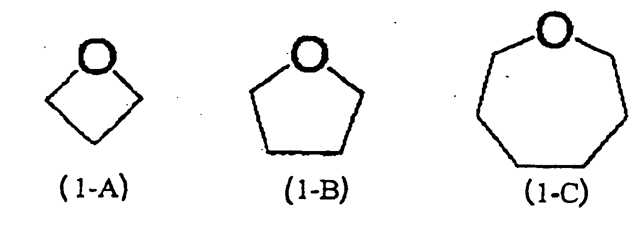

4. An ink composition according to any preceding claim, wherein the polymerizable compound having a partial structure that contains a cyclic ether and at least one fluorine atom further contains a chain haloalkyl group having from 4 to 12 fluorine atoms.

5. An ink composition according to any preceding claim, wherein the content of the polymerizable compound having a partial structure that contains a cyclic ether and at least one fluorine atom is from 3 to 20% by weight with respect to the total solids content of the ink composition.

6. Use of an ink composition according to any preceding claim for ink-jet recording.

7. An ink-jet recording method comprising:
ejecting an ink composition according to any of Claims 1-5 onto a recording medium using an ink-jet recording apparatus; and
curing the ink composition by irradiation with active rays.

8. A printed material obtainable by a method according to Claim 7.

9. A method for producing a planographic printing plate comprising:
ejecting an ink composition according to any of Claims 1-5 onto a support; and
irradiating the ejected ink composition with active rays to cure the ink composition and form a hydrophobic image on the support.

10. A planographic printing plate obtainable by a method according to Claim 9.

## Patentansprüche

1. Tintenzusammensetzung, umfassend eine polymerisierbare Verbindung mit einer Teilstruktur, die einen cyclischen Ether und mindestens ein Fluoratom umfasst, einen Polymerisationsinitiator, ein Färbemittel und eine radikalisch polymerisierbare Verbindung;
worin das Gewichtsverhältnis der polymerisierbaren Verbindung mit einer Teilstruktur, die einen cyclischen Ether und mindestens ein Fluoratom umfasst, zu der radikalisch polymerisierbaren Verbindung im Bereich von 1:3 bis 1:10 liegt.

2. Tintenzusammensetzung gemäss Anspruch 1, worin der cyclische Ether 3 bis 9 Kohlenstoffatome aufweist.

3. Tintenzusammensetzung gemäss Anspruch 1, worin der cyclische Ether durch irgendeine der folgenden Formeln (1-A) bis (1-C) dargestellt wird:

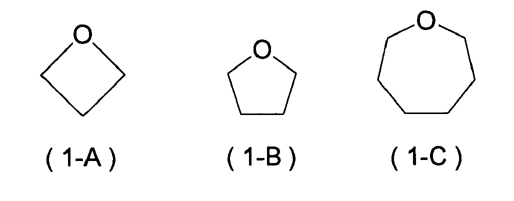

4. Tintenzusammensetzung gemäss irgendeinem vorhergehenden Anspruch, worin die polymerisierbare Verbindung mit einer Teilstruktur, die einen cyclischen Ether und mindestens ein Fluoratom umfasst, ferner eine kettige Halogenalkylgruppe umfasst, die 4 bis 12 Fluoratome aufweist.

5. Tintenzusammensetzung gemäss irgendeinem vorhergehenden Anspruch, worin der Gehalt der polymerisierbaren Verbindung mit einer Teilstruktur, die einen cyclischen Ether und mindestens ein Fluoratom umfasst, 3 bis 20 Gew.%, bezogen auf den Gesamtfeststoffgehalt der Tintenzusammensetzung, beträgt.

6. Verwendung einer Tintenzusammensetzung gemäss irgendeinem vorhergehenden Anspruch für die Tintenstrahl-Aufzeichnung.

7. Tintenstrahl-Aufzeichnungsverfahren, umfassend:
Ausstossen einer Tintenzusammensetzung gemäss irgendeinem der Ansprüche 1 bis 5 auf ein Aufzeichnungsmedium unter Verwendung einer Tintenstrahl-Aufzeichnungsvorrichtung; und
Härten der Tintenzusammensetzung durch Bestrahlung mit aktiver Strahlung.

8. Bedrucktes Material/Drucksache, erhältlich durch das Verfahren gemäss Anspruch 7.

9. Verfahren zur Herstellung einer Flachdruckplatte, umfassend:
Ausstossen einer Tintenzusammensetzung gemäss irgendeinem der Ansprüche 1 bis 5 auf einen Träger; und
Bestrahlen der ausgestossenen Tintenzusammensetzung mit aktiver Strahlung, um die Tintenzusammensetzung zu härten und ein hydrophobes Bild auf dem Träger zu bilden.

10. Flachdruckplatte, erhältlich durch ein Verfahren gemäss Anspruch 9.

## Revendications

1. Composition d'encre comprenant un composé polymérisable ayant une structure partielle qui contient un éther cyclique et au moins un atome de fluor, un initiateur de polymérisation, une matière colorante et un composé susceptible de polymérisation radicalaire ;
dans laquelle le rapport du poids du composé polymérisable ayant une structure partielle qui contient un éther cyclique et au moins-un atome de fluor sur le poids du composé susceptible de polymérisation radicalaire est dans la plage de 1:3 à 1:10.

2. Composition d'encre selon la revendication 1, dans laquelle l'éther cyclique a de 3 à 9 atomes de carbone.

3. Composition d'encre selon la revendication 1, dans laquelle l'éther cyclique est représenté par l'une quelconque des formules (1-A) à (1-C) suivantes :

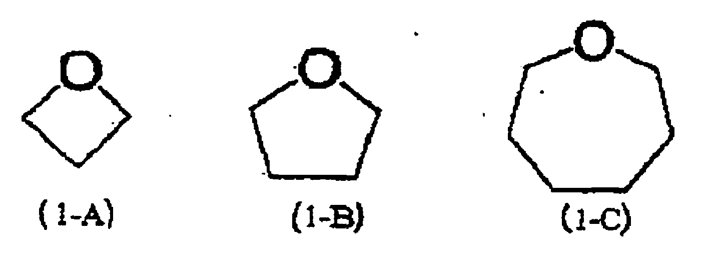

4. Composition d'encre selon une quelconque revendication précédente, dans laquelle le composé polymérisable ayant une structure partielle qui contient un éther cyclique et au moins un atome de fluor contient en outre un groupe haloalkyle en chaîne ayant de 4 à 12 atomes de fluor.

5. Composition d'encre selon une quelconque revendication précédente, dans laquelle la teneur du composé polymérisable ayant une structure partielle qui contient un éther cyclique et au moins un atome de fluor est de 3 à 20% en poids par rapport à la teneur totale en solides de la composition d'encre.

6. Utilisation d'une composition d'encre selon une quelconque revendication précédente pour un enregistrement par jet d'encre.

7. Procédé d'enregistrement par jet d'encre comprenant :
l'éjection d'une composition d'encre selon l'une quelconque des revendications 1 à 5 sur un support d'enregistrement en utilisant un appareil d'enregistrement par jet d'encre ; et
le durcissement de la composition d'encre par une irradiation avec des rayons actifs.

8. Matériau imprimé pouvant être obtenu par un procédé selon la revendication 7.

9. Procédé de production d'une plaque d'impression planographique comprenant :
l'éjection d'une composition d'encre selon l'une quelconque des revendications 1 à 5 sur un support ; et
l'irradiation de la composition d'encre éjectée avec des rayons actifs pour durcir la composition d'encre et former une image hydrophobe sur le support.

10. Plaque d'impression planographique pouvant être obtenue par un procédé selon la revendication 9.
